(19) Europäisches Patentamt
European Patent Office
Office européen des brevets

(11) **EP 4 335 830 A1**

(12) **EUROPEAN PATENT APPLICATION**

(43) Date of publication:
**13.03.2024 Bulletin 2024/11**

(21) Application number: **22194399.6**

(22) Date of filing: **07.09.2022**

(51) International Patent Classification (IPC):
**C04B 26/12** (2006.01)     **C08J 5/18** (2006.01)

(52) Cooperative Patent Classification (CPC):
**C08J 5/18; C04B 14/064; C04B 14/42;**
**C04B 26/125;** C08J 2379/04

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(71) Applicant: **Armacell Enterprise GmbH & Co. KG**
**12529 Schönefeld OT Waltersdorf (DE)**

(72) Inventors:
• **SOMBERG, Patric**
  **48167 Münster (DE)**

• **HOLUB, Pavel**
  **48143 Münster (DE)**
• **MÖLLER, Stephan**
  **48167 Münster (DE)**
• **ZHENG, Zhicheng**
  **48161 Münster (DE)**

(74) Representative: **Vossius & Partner**
**Patentanwälte Rechtsanwälte mbB**
**Siebertstraße 3**
**81675 München (DE)**

(54) **COMPOSITE ARTICLE COMPRISING AEROGEL PARTICLES, A MELAMINE RESIN AND FIBERS**

(57)     The present invention relates to a method for the preparation of a composite article comprising aerogel particles, a melamine resin and fibers, wherein the fibers are one or more selected from ceramic fibers, glass fibers and melamine fibers, as well as to a composite article obtainable by this method.

EP 4 335 830 A1

**Description**

The present invention relates to a method for the preparation of a composite article comprising aerogel particles, a melamine resin and fibrous blanket(s) as well as to a composite article obtainable by this method.

In many industrial and construction applications such as passive fire protection for structural steel beams, thermal insulation capability and temperature resistance at very high temperatures are required. UL1709 (Rapid Rise Fire Tests of Protection Materials for Structural Steel) requires a test temperature of 1093°C and ISO834 (cellulosic fire curve) requires temperature to reach 1110°C after a test period of 180 min. Novel insulation materials with thermal insulation capability and temperature resistance at elevated temperatures higher than 1100°C need to be developed.

Currently, various grades of ceramic fiber blankets are applied as insulation materials for applications above 1000°C. On the one hand, the variations in chemical composition of ceramic fiber blankets lead to different temperature resistance. Thus, ceramic fiber blankets based on alkaline earth silicate (AES) are resistant to operating temperatures up to 1200°C, while ceramic fiber blankets based on aluminum oxide (AO) can withstand 1600°C. On the other hand, the various chemical compositions lead to significant differences in material costs of ceramic fiber blankets. The costs of ceramic fiber blankets based on aluminum oxide are typically about 20 times the costs of ceramic fiber blankets based on alkaline earth silicate. A sharp increase in material cost can be observed with the increase in the temperature resistance requirement.

In view of the prior art, the present invention provides, i.a., ceramic fiber blankets with improved thermal insulation capability and temperature resistance at reduced costs.

The present inventors surprisingly found that this problem can be solved by incorporating aerogel into ceramic fiber blankets after the fiber blankets have been formed. This can be achieved by preparing an aerogel composition comprising an aerogel powder, a melamine-formaldehyde resin (which forms a crosslinked melamine resin after curing) and an organic solvent and injecting it into the fibrous blanket.

The present inventors surprisingly found that the thermal insulation capability also of glass-fiber blankets and melamine fiber blankets can be improved by incorporating aerogel.

In aerogel-incorporated materials it is generally desirable to use binders in order to structurally reinforce the aerogel-incorporated materials and bring versatile benefits, such as reduction of dust release and improvement of mechanical integrity. However, compatibility issue between the binders and the components in the aerogel dispersion, such as aerogel particles and solvent, exist. In such cases, aggregation of aerogel particles and/or coagulation of binder molecules may occur, and thus the blend dispersion containing aerogel particles and binders may not stay stable. Furthermore, the thermal decomposition issue of binders, in particular organic binders, represents a considerable problem for passive fire protection. If the heat release from the decomposition of binders is too high, the fire resistance of the aerogel-incorporated materials will be worsened. The present invention is, among others, based on the finding that melamine-formaldehyde resin can be used as a binder in such fibrous blankets without reducing the excellent suitability of these fibrous blankets for passive fire protection. It is to be understood that the references herein to "fibrous blankets" are not limited to the plural form thereof but also encompass the presences of a single "fibrous blanket".

Thus, in a first aspect, the present invention relates to a method for the preparation of a composite article comprising aerogel particles, a melamine resin and fibers, wherein the fibers are one or more selected from ceramic fibers, glass fibers and melamine fibers, the method comprising:

- providing a fibrous article comprising fibers, wherein the fibers are one or more selected from ceramic fibers, glass fibers and melamine fibers,
- providing an aerogel composition comprising an aerogel powder, a melamine-formaldehyde resin and an organic solvent,
- combining the fibrous article and the aerogel composition, and
- partially or completely removing the organic solvent to obtain the composite article.

The present invention furthermore relates to a composite article obtainable by this method.

In addition, the invention relates to a composite article comprising aerogel particles, a melamine resin and fibers, wherein the fibers are one or more selected from ceramic fibers, glass fibers and melamine fibers, and wherein the composite article is obtainable by injecting or impregnating an aerogel composition comprising an aerogel powder, a melamine-formaldehyde resin and an organic solvent, and optionally inorganic opacifiers and/or mineral fillers, into a fibrous article comprising fibers, and partially or completely removing the organic solvent to obtain the composite article.

In still a further aspect, the present invention relates to a composite article comprising aerogel particles, a melamine resin and fibers, wherein the fibers are one or more selected from ceramic fibers, glass fibers and melamine fibers, and wherein one or more of the following requirements (i) to (vii) are fulfilled:

(i) the composite article contains less than 15% by weight organic compounds other than the melamine resin;

(ii) at least 50% of the fibers in the composite article have a length of 5 mm or more;

(iii) the composite article contains less than 10% by weight binder other than the melamine resin;

(iv) the composite article exhibits a total weight loss in thermogravimetric analysis (TGA) when being heated in a nitrogen atmosphere from 30°C to 1100°C with a temperature increase of 10 °C/min of less than 35% by weight;

(v) the weight ratio of the one or more aerogels to the one or more fibers (aerogel/fiber) in the composite article is 1:8 or higher;

(vi) the composite article has a burn-through time of 60 minutes or more, wherein the burn-through resistance is determined using the composite article in the form of a 30 cm x 30 cm sheet with a thickness of 13 mm and treating the composite article at the centre of its first major surface with a flame having a temperature of 1400°C, using a soldering torch, wherein the burn-through time is the duration from start of the flame treatment until the centre of the second major surface reaches a temperature of 1000°C;

(vii) when using the composite article in the form of a 20 cm x 50 cm sheet with a thickness of 13 mm and treating the composite article at the full surface of its first major surface in accordance with the ISO 834 temperature-time curve for 180 minutes, the centre of the second major surface has a temperature of less than 1000°C.

BRIEF DESCRIPTION OF THE FIGURES

Figure 1: Preparation of blend dispersions containing aerogel powder and melamine-formaldehyde resin:

    a) Melamine-formaldehyde resin solution 14 wt-%
    b) Aerogel dispersion 11 wt-%
    c) Blend dispersion

Figure 2: Impregnation of blend dispersion in melamine fiber blankets:

    a) Wetgel in blanket
    b) Drying w/o pressure
    c) Finished blanket
    d) Drying under pressure
    e) Finished blanket

Figure 3: Structurally reinforced aerogel-incorporated melamine fiber blankets:

    a) Unfilled - Dried w/o pressure - Dried under pressure
    b) Surface
    c) Cross-section

Figure 4: Impregnation of blend dispersion in 3.5 mm thick ceramic fiber blanket:

    a) Wetgel in blanket
    b) Drying under pressure
    c) Finished blanket
    d) Surface
    e) Cross-section

Figure 5: Impregnation of blend dispersion in 8 mm thick ceramic fiber blanket:

    a) Wetgel in blanket
    b) Drying under pressure
    c) Finished blanket
    d) Surface
    e) Cross-section

Figure 6: Impregnation of blend dispersion in 1 mm thick ceramic fiber paper:

    a) Wetgel in CF paper

b) Drying under pressure
c) Finished blanket
d) Surface

Figure 7: Coating reinforcement on a structurally reinforced aerogel-incorporated melamine fiber blanket:

a) Before coating
b) After coating

Figure 8: Soldering torch test setup

Figure 9: Torch test of a structurally reinforced aerogel-incorporated ceramic fiber blanket (raw blanket thickness 3.5 mm) for 60 min:

a) Structurally reinforced aerogel-incorporated ceramic fiber blanket before torching

b) After being torching for 60 min

c) Torched area

d) Back view

Figure 10: Dust release behavior of a structurally reinforced aerogel-incorporated melamine fiber blanket (thickness 11.6 mm) on a steel sheet:

a) Structurally reinforced aerogel-incorporated melamine fiber blanket being shaken on a steel sheet
b) The surface of the steel sheet stays clean after the dust release test

Figure 11: Thermal conductivity of an unfilled, an unreinforced aerogel-incorporated, and a structurally reinforced aerogel-incorporated ceramic fiber blanket (raw thickness 3.5 mm).

Figure 12: Compression behavior of unreinforced aerogel-incorporated, and structurally reinforced aerogel-incorporated ceramic fiber blanket (thickness 3.5 mm):

a) Unreinforced aerogel-incorporated ceramic fiber blanket
b) Structurally reinforced aerogel-incorporated ceramic fiber blanket

Figure 13: Thermal gravimetric analysis (TGA) of unreinforced aerogel-incorporated, and structurally reinforced aerogel-incorporated ceramic fiber blanket (thickness 3.5 mm):

a) Unreinforced aerogel-incorporated ceramic fiber blanket
b) Structurally reinforced aerogel-incorporated ceramic fiber blanket

DEFINITION OF THE TERMS USED HEREIN

In the context of the present invention, the term "composite article" is to be understood as referring to any article which comprises one or more aerogel particles and one or more fibers. Thus, the term "composite" does not imply any limitations other than the presence of aerogel particles, a melamine resin and fibers, wherein the fibers are one or more selected from ceramic fibers, glass fibers and melamine fibers, which together form the article. It is to be understood that the aerogel particles, the melamine resin and the fibers are not spatially distant. Rather, the aerogel particles and the melamine resin are typically between and around the fibers. Preferably, the one or more fibers form a woven or non-woven structure, in and around which the aerogel particles and the melamine resin are present.

The composite article is typically in the form of batting, nonwovens, mats, felts or blankets, such as needled fiber blankets. It is preferably a nonwoven fiber blanket or a needled fiber blanket, wherein the aerogel particles are present. The term "nonwoven" is to be understood as also including needled fiber blankets. The composite article preferably has a thickness in the range of 3 mm to 500 mm, preferably in the range of 3 to 100 mm, more preferably in the range of 3 to 50 mm, even more preferably in the range of 5 to 30 mm (e.g. in the case of fiber boards). Alternatively, the composite article preferably has a thickness in the range of 0.1 mm to 30 mm, preferably in the range of 0.5 to 10 mm, more preferably in the range of 1 to 3 mm, even more preferably in the range of 1 to less than 3 mm (may also be referred to as a fiber paper). Generally, it is preferred that the composite article has a thickness of 1 to 30 mm. The extension in the other two dimensions is preferably each at least 5 times the thickness. It is to be understood that the term "dimension" as used herein refers to the three known space dimensions which are orthogonal to each other (such as understood in "3-dimensional").

The term "batting" as used herein refers to a layer or sheet of fibrous material, the fibrous material typically comprising the fibers.

The term "nonwoven" refers to any material containing fibers which is neither woven nor knitted.

The term "nonwoven fiber blanket" is to be understood as relating any material containing fibers which is neither woven nor knitted, wherein the material is in the form of a blanket.

The term "needled fiber blanket" is to be understood as relating to any material containing fibers wherein the fibers are needled and wherein the material is in the form of a blanket.

As used herein, the term "blanket" typically refers to an article which extends into one dimension less than in the other two dimensions. Preferably, it refers to an article which extends in one dimension only up to 1000 mm, preferably up to 500 mm, more preferably up to 100 mm, while extending at least 5 times as much in each of the other two dimensions. In other words, the term "blanket" typically refers to flat articles, or oblong articles.

Unless otherwise explicitly indicated, the use of singular or plural forms should be understood as allowing the presence of "one or more" of the nouns being in singular or plural form. In particular, the term "fibrous article comprising fibers" refers to a "fibrous article comprising one or more fibers". Similarly, the term "aerogel composition comprising an aerogel powder, a melamine-formaldehyde resin and an organic solvent" is to be understood as also including the case where more than one (type of) aerogel powder and/or more than one (type of) melamine-formaldehyde resin and/or more than one (type of) organic solvent are comprised in the aerogel composition. Mixtures of different types of aerogel powders and/or mixtures of different types of organic solvents may be used.

As used herein, the term "melamine-formaldehyde resin" or "melamine-formaldehyde binder" refers to oligomers (or mixtures of oligomers) primarily (typically at least 50 wt.-%) obtained from melamine and formaldehyde with formaldehyde acting as a crosslinker. The melamine reacts with formaldehyde typically under alkaline conditions to form mixtures of various oligomers also referred to as methylolmelamines. Thus, "melamine-formaldehyde resin" or "melamine-formaldehyde binder" preferably relate to oligomers containing at least 50 wt.-%, preferably 60 wt.-%, more preferably 70 wt.-%, even more preferably 80 wt.-%, still more preferably 90 wt.-% or even 95 or 98 wt.-% atoms obtained from the reaction of melamine and formaldehyde. Such oligomers are able of undergoing further condensation upon additional heating or readily react with thiol, hydroxyl, carboxyl and amide groups to form three-dimensional thermoset polymer networks. Due to its oligomeric characteristic, it is soluble in water or mixtures of water and organic solvent (i.e. the solubility is preferably higher than 5 g/l in a 1:1 by wt. mixture of water and 2-propanol at 20°C). In Differential Scanning Calorimetry (DSC), an exothermic enthalpy in the temperature range of 100-200°C is typically seen in the DSC thermogram of the "melamine-formaldehyde resin" or "melamine-formaldehyde binder" (preferably, an enthalpy integral in this range is $10 \, \text{J} \cdot \text{g}^{-1}$ or more). A "melamine-formaldehyde resin" or "melamine-formaldehyde binder" is typically used in the methods of production of the present invention, while the final products typically contain the crosslinked product thereof, which is herein referred to as a "melamine resin" or "crosslinked melamine-formaldehyde resin".

As used herein, the term "melamine resin" or "crosslinked melamine-formaldehyde resin" refer to polymers which can be obtained by crosslinking a "melamine-formaldehyde resin" or "melamine-formaldehyde binder". The crosslinking may also be referred to as "curing" and typically refers to heating to a temperature of at least 100°C, typically to a temperature of 120 to 180°C for 1 to 8 hours. Thus, "melamine resin" or "crosslinked melamine-formaldehyde resin" preferably relate to polymers containing at least 50 wt.-%, preferably 60 wt.-%, more preferably 70 wt.-%, even more preferably 80 wt.-%, still more preferably 90 wt.-% or even 95 or 98 wt.-% atoms derived from the reaction of melamine and formaldehyde. A "melamine resin" or "crosslinked melamine-formaldehyde resin" is typically a crosslinked material and cannot be dissolved in water nor mixtures of water and organic solvent (i.e. the solubility is preferably lower than 5 g/l in a 1:1 by wt. mixture of water and 2-propanol at 20°C). Due to the crosslinked nature, an exothermic enthalpy in the temperature range of 100-200°C is typically not seen (preferably, an enthalpy integral in this range is not higher than $10 \, \text{J} \cdot \text{g}^{-1}$) in the DSC thermogram of the "melamine resin" or "crosslinked melamine-formaldehyde resin". The definition of "melamine resin" also applies to the melamine in melamine fibers.

As used herein, the term "aerogel" refers to a porous material derived from a gel, in which the liquid component of the gel has been replaced with a gas essentially without collapse of the gel structure. Preferably, the "aerogel" is a silica aerogel. Such silica aerogels typically have a density of 0.1 $\text{g/cm}^3$ or less, preferably 0.05 $\text{g/cm}^3$ or less, and can be prepared by the well-known Stöber process. In the present invention, the "aerogel" is preferably a silica aerogel which is obtainable according to the process described in EP 2 722 311 A2, preferably as defined in claim 22 thereof.

In the present invention, the term "aerogel particle" preferably refers to silica aerogel particles which are obtainable according to the process described in EP 2 722 311 A2, preferably as defined in claim 22 thereof. Aerogel particles suitable for use in the present invention are, e.g., commercially available as "Jios AeroVa", wherein the "D20 Grade" is preferred. "Jios AeroVa D20 Grade" is described as having a D95 particle size range of less than 20 $\mu$m, a bulk density of 0.03 to 0.1 $\text{g/cm}^3$, a thermal conductivity of 0.017 to 0.022 W/m·k, a surface area of 600 to 800 $\text{m}^2\text{/g}$,

and a porosity of more than 90%.

The term "heterophase reaction" preferably refers to any reaction conducted in a system containing more than one phase e.g. in a system composed of two non-mixable phases i.e. an aqueous phase and a phase which is not mixable with the aqueous phase, which is preferably a non-polar solvent phase. The reactions i.e. the creation of the first structures start at the interface between the different phases. Accordingly, it does not relate to reactions in which all reactants are dissolved in the same solvent. An example of a "heterophase reaction" is an emulsion reaction, suspension reaction or dispersion reaction.

The term "ceramic" preferably refers to any material which is inorganic, non-metallic and preferably amorphous. It typically relates to one or more inorganic materials selected from oxides, nitrides and carbides, including any mixtures thereof. Preferably, the "ceramic" material contains at least 90 wt.-% (preferably at least 95 wt.-%, more preferably 99 wt.-%) of a total of one or more oxides, nitrides and/or carbides of silicon, aluminium, cerium, zirconium and/or alkaline earth metal(s).

The term "fiber" as used herein preferably refers to an article which extends in a first dimension at least 10 times more than in any of the other two dimensions. The first dimension preferably corresponds to the length direction of the fiber. The fibers are one or more selected from ceramic fibers, glass fibers and melamine fibers. Preferably, the fibers contain ceramic fibers and optionally glass fibers and/or melamine fibers. More preferably, at least 50 wt.-% of the fibers are ceramic fibers, with the remainder being glass fibers and/or melamine fibers. Even more preferably at least 60 wt.-%, at least 70 wt.-%, at least 80 wt.-%, at least 90 wt.-%, at least 95 wt.-% or even at least 98 wt.-% of the fibers are ceramic fibers, based on the total amount of fibers in the composite article of the present invention. Similarly, preferably at least 60 wt.-%, at least 70 wt.-%, at least 80 wt.-%, at least 90 wt.-%, at least 95 wt.-% or even at least 98 wt.-% of the fibers in the fibrous article used in the present invention are ceramic fibers, based on the total amount of fibers in the fibrous article. It is particularly preferred that the fibers are ceramic fibers.

The term "fibrous article" refers to any article comprising one or more fibers. Examples therefore include batting, nonwovens, mats, felts and needled fiber blankets. Preferred examples are a nonwoven fiber blanket or a needled fiber blanket. The fibrous article preferably has a thickness in the range of 0.1 mm to 500 mm. For example, the fibrous article may have a thickness in the range of 3 mm to 500 mm, preferably in the range of 3 to 100 mm, more preferably in the range of 3 to 50 mm, even more preferably in the range of 5 to 30 mm (e.g. in the case of fiber boards). Alternatively, the fibrous article preferably has a thickness in the range of 0.1 mm to 30 mm, preferably in the range of 0.5 to 10 mm, more preferably in the range of 1 to 3 mm, even more preferably in the range of 1 to less than 3 mm (may also be referred to as a fiber paper). Generally, it is preferred that the fibrous article has a thickness of 1 to 30 mm.

As used herein, the term "aerogel composition" relates to any mixture comprising an aerogel powder, a melamine-formaldehyde resin and an organic solvent. Preferably, the "aerogel composition" is a mixture comprising the aerogel powder and the melamine-formaldehyde resin dispersed in an organic solvent. In other words, the "aerogel composition" is preferably an "aerogel dispersion".

The term "dispersion" as used herein preferably relates to a mixture wherein solid particles of one material are dispersed in a continuous phase of another material which is liquid. The terms solid and liquid as used herein refer to the state of a material at a temperature of 25°C and a pressure of 1 atm. Being "dispersed" preferably describes a state where the particles do not readily settle in the continuous phase of the liquid.

As used herein, the term "organic solvent" refers to any organic compound which is liquid at a temperature of 20°C and a pressure of 1 atm. Preferred examples of organic solvents include hydrocarbon solvents and alcohols including any mixtures thereof. Hydrocarbons are understood to be organic compounds consisting of carbon and hydrogen atoms.

It is to be understood that the term "removing the organic solvent" preferably also includes removing water and may furthermore include curing (typically crosslinking) of a melamine-formaldehyde resin.

The term "organic compound" as used herein relates to any compounds containing at least one carbon-hydrogen bond. When calculating the content of organic compounds in the products of the present invention, the melamine-formaldehyde resin is preferably not regarded as an organic compound.

Terms such as "comprise" or "contain", such as in "A comprises B", are used herein to express an open definition of a composition etc. Accordingly, "A comprises B" is to be understood as indicating that A comprises at least B but may furthermore contain any number and amount of other components. In contrast, the term "consists of" such as in "A consists of B" typically indicates that A does not contain components other than B.

Terms such as "preferably" indicate that a certain feature may or may not be fulfilled. Such terms therefore precede optional features. Generally, if the feature is fulfilled, it is expected that additional beneficial effects may result.

The term "injecting" as used herein refers to the action of introducing (typically with force) a fluid (such as the aerogel composition) into a solid material (such as the fibrous article). A suitable approach for "injecting" is, e.g., described in EP 3 023 528 A1.

The term "impregnating" or "soaking" as used herein refers to the action of introducing (typically without force) a fluid (such as the aerogel composition) into a solid porous material (such as the fibrous article). The "impregnating" or "soaking" can for example be achieved either by placing the article to be impregnated or soaked in a container which contains the typically liquid material with which the article is to be impregnated or in a way that the liquid is poured over the article to be impregnated or soaked.

As used herein, the term "binder" relates to any materials which are intended to provide adhesion between two solid materials. Preferably, the term "binder" relates to any materials which serve to bind aerogel particles to each other and/or to fibers. The binders may be of organic or inorganic nature. Particular examples of binders include, but are not limited, to water glass, silicone-based binders and phenolic resin-based binders. Melamine-formaldehyde resins may serve as a binder.

DETAILED DESCRIPTION OF THE PRESENT INVENTION

The present invention relates to a method for the preparation of a composite article comprising aerogel particles, a melamine resin and fibers, wherein the fibers are one or more selected from ceramic fibers, glass fibers and melamine fibers, and as well as to a composite article obtainable by this method.

The method

The present invention concerns a method for the preparation of a composite article comprising aerogel particles, a melamine resin and fibers, wherein the fibers are one or more selected from ceramic fibers, glass fibers and melamine fibers, the method comprising:

- providing a fibrous article comprising fibers, wherein the fibers are one or more selected from ceramic fibers, glass fibers and melamine fibers,
- providing an aerogel composition comprising an aerogel powder, a melamine-formaldehyde resin and an organic solvent,
- combining the fibrous article and the aerogel composition, and
- partially or completely removing the organic solvent to obtain the composite article.

The method is not limited to these steps and may include any number of additional steps before, between and after each of these steps. The steps mentioned above are thus not necessarily consecutive steps. However, it is preferred that they be conducted in the order specified. Furthermore, it is preferred that the steps be consecutive.

As a skilled person will understand, the aerogel powder and the melamine-formaldehyde resin do not necessarily have to be applied at the same time (although this is preferred), but the aerogel powder and the melamine-formaldehyde resin could also be applied in the form of separate compositions each containing an organic solvent. For example, it is envisaged that the last three steps could also be replaced by the following six steps:

- providing an aerogel composition comprising an aerogel powder and an organic solvent,
- combining the fibrous article and the aerogel composition,
- partially or completely removing the organic solvent to obtain a composite article,
- providing a resin composition comprising a melamine-formaldehyde resin and an organic solvent,
- combining the fibrous article and the resin composition, and
- partially or completely removing the organic solvent to obtain the composite article;

or by the following five steps:

- providing an aerogel composition comprising an aerogel powder and an organic solvent,
- providing a resin composition comprising a melamine-formaldehyde resin and an organic solvent,
- combining the fibrous article with the aerogel composition the resin composition in any order, and
- partially or completely removing the organic solvent to obtain the composite article.

The steps of the method described herein may each include additional activities. For example, the step of providing an aerogel composition comprising an aerogel powder, a melamine-formaldehyde resin and an organic solvent may include providing the aerogel composition containing additional components other than the aerogel powder, a melamine-formaldehyde resin and the organic solvent. Furthermore, the step of combining the fibrous article and the aerogel composition may include combining not only the fibrous article and the aerogel composition but further articles, compositions etc.

The fibrous article and the aerogel composition are preferably combined by injecting, soaking or impregnating the aerogel composition into the fibrous article, more preferably by impregnating the aerogel composition into the fibrous article. Suitable methods for injecting such a composition are known to the skilled person and, e.g., described in EP 3 023 528 A1.

Preferably, the partially or completely removing the organic solvent to obtain the composite article by drying includes drying at a temperature of 50 to 170°C for 1 to 8 hours, optionally followed by drying at 171°C to 230°C for 1 to 48 hours.

For example, the partially or completely removing the organic solvent may be conducted at temperature of 120 to 230°C, e.g. in hot air oven under atmosphere or under mechanical pressure. When following this approach, both drying and curing may be conducted in a single step. Alternatively, drying may be conducted at a temperature of 50 to less than 120°C, e.g. in hot air oven and under atmosphere or under mechanical pressure, followed by curing at a temperature of 120 to 230°C, preferably 140°C to 230 °C, e.g. in a hot press. The pressure during the curing step is preferably in a range of from 10 to 500 bar, more preferably from 20 to 300 bar.

The composite article to be obtained by the method

The composite article obtainable by the method of the present invention preferably contains 15 to 70 wt.-% aerogel based on the total weight of the composite article. More preferred is 20 to 60 wt.-%, still more preferred is 30 to 50 wt.-% aerogel based on the total weight of the composite article.

The composite article obtainable by the method of the present invention furthermore preferably contains 0.1 to 20 wt.-% melamine resin based on the total weight of the composite article. More preferred is 0.5 to 15 wt.-%, even more preferred is 1 to 12 wt.-%, still more preferred is 3 to 10 wt.-% melamine resin based on the total weight of the composite article.

The composite article preferably has a thickness in the range of 3 mm to 500 mm, preferably in the range of 3 to 100 mm, more preferably in the range of 3 to 50 mm, even more preferably in the range of 5 to 30 mm (e.g. in the case of fiber boards). Alternatively, the composite article preferably has a thickness in the range of 0.1 mm to 30 mm, preferably in the range of 0.5 to 10 mm, more preferably in the range of 1 to 3 mm, even more preferably in the range of 1 to less than 3 mm (may also be referred to as a fiber paper). Generally, it is preferred that the composite article has a thickness of 1 to 30 mm.

When the width of the composite article is W, the length of the composite article is L and the thickness of the composite article is T, the following requirement is preferably fulfilled by the composite article:

$$R = \frac{W \times L}{T^2}$$

wherein R is 100 or more, preferably 1000 or more, more preferably 10000 or more,

wherein W/L is preferably in a range of 1000/1 to 1/1000,
wherein W/T is preferably 10 or more, and
wherein L/T is preferably 10 or more.

In order to achieve excellent flame resistance, the composite article typically contains less than 15% by weight organic compounds, preferably less than 10% by weight organic compounds, more preferably less than 5% by weight organic compounds, even more preferably less than 2% by weight organic compounds, still more preferably less than 1% by weight organic compounds, most preferably less than 0.5% by weight organic compounds, based on the total weight of the composite article. The term organic compound typically relates to any compounds containing at least one carbon-hydrogen bond. In this context, the term organic compound is to be understood as not covering the melamine resin.

By the method of the present invention, it is possible to ensure that at least 50% of the fibers in the composite article have a length of 5 mm or more. Preferably at least 50% of the fibers in the composite article have a length of 10 mm or more, more preferably wherein at least 75% of the fibers in the composite article have a length of 5 mm or more, even more preferably wherein at least 75% of the fibers in the composite article have a length of 10 mm or more, still more preferably wherein at least 75% of the fibers in the composite article have a length of 15 mm or more, most preferably wherein at least 75% of the fibers in the composite article have a length of 20 mm or more.

To improve flame resistance and costs, the composite article typically contains less than 10% by weight binder other than the melamine resin, preferably less than 5% by weight binder other than the melamine resin, more preferably less than 2% by weight binder other than the melamine resin, even more preferably less than 1% by weight binder other than the melamine resin, still more preferably less than 0.5% by weight binder other than the melamine resin, most preferably less than 0.1% by weight binder other than the melamine resin. Furthermore, the reduction in the amount of binder other than the melamine resin may be beneficial for flame resistance, cohesion and insulating properties of the composite article as more fibers and/or aerogel can be incorporated in the composite article. The methods used in the prior art generally require the use of a binder other than the melamine resin to ensure the structural integrity of the composite articles by binding the fibers to each other and to the fillers. As the present invention allows the use of a fibrous article as a starting material, instead of a slurry of fibers and fillers, the amount of binder can be considerably reduced.

Due to the use of the inventive method, the composite article may exhibit a total weight loss, in thermogravimetric analysis (TGA) when being heated in a nitrogen atmosphere from 30°C to 1100°C with temperature ramp of 10 °C/min, of less than 35% by weight, preferably less than 30% by weight, more preferably less than 25% by weight, even more preferably less than 20% by weight, still more preferably less than 15% by weight, most preferably less than 10% by weight, based on the total weight of the composite article before the thermogravimetric analysis.

Furthermore, it is possible to achieve a weight ratio of the one or more aerogels to the one or more fibers (aerogel/fiber) in the composite article is 1:8 or higher, preferably 1:4 or higher, more preferably 1:2 or higher, even more preferably 1:1 or higher. In the prior art methods, which are typically based on drying a dispersion of fibers, the amount and length of fibers which can stably be included in the fiber blankets is severely limited, i.a. due to the required use of a considerable amount of binder.

The composite article may further comprise inorganic opacifiers and/or mineral fillers. Accordingly, it is preferred that the step of providing an aerogel composition comprising an aerogel powder, a melamine-formaldehyde resin and an organic solvent, is a step of providing an aerogel composition comprising an aerogel powder, a melamine-formaldehyde resin and an organic solvent and inorganic opacifiers and/or mineral fillers.

The fibrous article

The fibrous article is preferably selected from batting, nonwovens, mats, felts and needled fiber blankets which are preferably prepared via an air-lay or a carding process, wherein the fibrous article is preferably a nonwoven fiber blanket or a needled fiber blanket.

The fibrous article preferably contains 90 wt.-% or more, more preferably 95 wt.-% or more, even more preferably 98 wt.-% or more, of a total of ceramic fibers, glass fibers and melamine fibers.

When ceramic fibers are preferred, typically 50 wt.-% or more, preferably 60 wt.-%, more preferably 70 wt.-%, even more preferably 80 wt.-%, still preferably 90 wt.-% or more, even still more preferably 95 wt.-% or more, or even more 98 wt.-% or more, or even more preferably all of the fibers in the fibrous article and/or the composite article are ceramic fibers.

When glass fibers are preferred, typically 50 wt.-% or more, preferably 60 wt.-%, more preferably 70 wt.-%, even more preferably 80 wt.-%, still preferably 90 wt.-% or more, even still more preferably 95 wt.-% or more, or even more 98 wt.-% or more, or even more preferably all of the fibers in the fibrous article and/or the composite article are glass fibers.

When melamine fibers are preferred, typically 50 wt.-% or more, preferably 60 wt.-%, more preferably 70 wt.-%, even more preferably 80 wt.-%, still preferably 90 wt.-% or more, still even more preferably 95 wt.-% or more, or even more 98 wt.-% or more, or even more preferably all of the fibers in the fibrous article and/or the composite article are melamine fibers.

It is furthermore preferred that the fibrous article has a density of 20 to 300kg/m$^{3k}$, preferably 50 to 200 kg/m$^3$, more preferably 80 to 150 kg/m$^3$.

Preferred examples of fibrous articles to be used in the present invention are (amounts in wt.-%)):

Fiberfrax Duraback by Unifrax, having a recommended operating temperature of 982°C, available with a density of 64 kg/m$^3$ (typically having a chemical composition including 31-35% $Al_2O_3$, 50-54% $SiO_2$, 5% $ZrO_2$, 1.30% $Fe_2O_3$, 1.70% $TiO_2$, 0.50% MgO, and ≤7.5% CaO);

Fiberfrax Durablanket S by Unifrax, having a recommended operating temperature of 1177°C, available with densities of 64, 96 and 128 kg/m$^3$ (typically having a chemical composition including 43-47% $Al_2O_3$, 53-57% $SiO_2$, <1% $Fe_2O_3$, and <1% $TiO_2$);

Fiberfrax Durablanket HP-S by Unifrax, having a recommended operating temperature of 1204°C, available with densities of 64, 96 and 128 kg/m$^3$ (typically having a chemical composition including 43-47% $Al_2O_3$, and 53-57% $SiO_2$);

Fiberfrax Durablanket 2600 by Unifrax, having a recommended operating temperature of 1343°C, available with densities of 96 and 128 kg/m$^3$ (typically having a chemical composition including 29-31% $Al_2O_3$, 53-55% $SiO_2$, 15-17% $ZrO_2$);

Fiberfrax PH blanket by Unifrax, having a recommended operating temperature of 1177°C, available with a density of 96 kg/m$^3$ (typically having a chemical composition including 43-47% $Al_2O_3$, 53-55% $SiO_2$, <1% $Fe_2O_3$, and <1%

$TiO_2$);

Fiberfrax Moist Pak-D by Unifrax, having a recommended operating temperature of 1010°C, available with densities of 190-290 kg/m$^3$ (typically having a chemical composition including 23-32% $Al_2O_3$ and 68-77% $SiO_2$);

Fiberfrax Fibermat Blanket by Unifrax, having a recommended operating temperature of 677°C, available with a density of 88 kg/m$^3$ (typically having a chemical composition including 29-47% $Al_2O_3$, 52-57% $SiO_2$, and less than 18% $ZrO_2$);

Fibermax Mat by Unifrax, having a recommended operating temperature of 1566°C, available with a density of 24 kg/m$^3$ (typically having a chemical composition including 72% $Al_2O_3$, 27% $SiO_2$, 0,02% $Fe_2O_3$, 0,001% $TiO_2$, 0,05% MgO, and 0,05% CaO);

Fibermax Needled Blanket by Unifrax, having a recommended operating temperature of 1600°C, available with densities of 100 and 130 kg/m$^3$ (typically having a chemical composition including 72% $Al_2O_3$, 27% $SiO_2$, 0,02% $Fe_2O_3$, 0,001% $TiO_2$, 0,05% MgO, and 0,05% CaO);

Insulfrax LTX Blanket by Unifrax, having a recommended operating temperature of 1100°C, available with densities of 64, 96, 128 and 160 kg/m$^3$ (typically having a chemical composition including <1% $Al_2O_3$, 61-67% $SiO_2$, <0,6% $Fe_2O_3$, 2,5-6,5% MgO, and 27-33% CaO);

Insulfrax S Blanket by Unifrax, having a recommended operating temperature of 1100°C, available with densities of 64, 96 and 128 kg/m$^3$ (typically having a chemical composition including 61-67% $SiO_2$, 2-7% MgO, and 27-33% CaO);

Isofrax 1400 Blanket by Unifrax, having a recommended operating temperature of 1300°C, available with densities of 96, 128 and 160 kg/m$^3$ (typically having a chemical composition including 70-80% $SiO_2$ and 18-27% MgO);

"CERAKWOOL New-Bio" by KCC, available with densities of 96, 128 and 160 kg/m$^3$ (typically having a chemical composition including <1% $Al_2O_3$, 58-67% $SiO_2$, 2-8% MgO, and 26-34% CaO);

Superwoo plus blanket SPB by New Fire, having a recommended operating temperature of 1050°C, available with densities of 96 and 128 kg/m$^3$ (typically having a chemical composition including 62-68% $SiO_2$, 3-7% MgO, and 26-32% CaO);

Saffil Blanket & Mat by Unifrax, having a recommended operating temperature of 1600°C, available with densities of 35, 96 kg/m$^3$ (typically having a chemical composition including 95-97% $Al_2O_3$ and 3-5% $SiO_2$);

isoTherm S Vlies by Frenzelit, having a recommended operating temperature of 1100°C (typically having a chemical composition including >94% $SiO_2$);

Insulfrax Paper by Unifrax, having a recommended operating temperature of 1200°C (typically having a chemical composition including 61-67% $SiO_2$, <1% $Al_2O_3$, 2.5-6.5% MgO, and 27-33% CaO);

E-glass Fiber Needle Mat by Lih Feng Jing , having a recommended operating temperature of 650°C (typically having a chemical composition including 52-56% $SiO_2$, 12-16% $Al_2O_3$, 0-6% MgO, and 15-25% CaO, 4-9% $B_2O_3$, 0-1% $Na_2O+K_2O$);

isoGLAS needlemat by Frenzelit, having a recommended operating temperature of 550°C (typically having a chemical composition including 52-56% $SiO_2$, 12-16% $Al_2O_3$, 0-6% MgO, and 15-25% CaO, 6-13% $B_2O_3$, 0.3-2% $Na_2O$);

Melt-blown melamine nonwoven blanket by smartMELAMINE d.o.o., having a recommended operating temperature of 240°C (typically having a chemical composition including >99% melamine resin).

Among these, the following are preferred:

Fiberfrax Duraback, Fiberfrax Durablanket S, Fiberfrax Durablanket 2600, Fiberfrax Moist Pak-D, Fibermax Needled Blanket, Insulfrax LTX Blanket, Insulfrax S Blanket, Isofrax 1400 Blanket, Saffil Blanket & Mat, isoTherm S Vlies, Insulfrax Paper, E-glass Fiber Needle Mat, isoGLAS needlemat, and melt-blown melamine nonwoven blanket (smartMELAMINE)

The ceramic fibers

The ceramic fibers may generally be structured into three classes of fibers

a) ceramic fibers containing 80 wt.-% or more of alumina,
b) ceramic fibers containing 2 to less than 80 wt.-% alumina, and
c) ceramic fibers containing less than 2 wt.-% alumina.

a) ceramic fibers 80 wt.-% or more of alumina:

This first type of ceramic fibers typically contains 80 wt.-% or more of alumina, preferably 85 wt.-% or more of alumina, preferably 90 wt.-% or more of alumina, preferably 95 wt.-% or more of alumina, based on the total weight of the ceramic fibers, wherein the content of alumina is preferably 99 wt.-% or less, more preferably 98 wt.-% or less, even more preferably 97 wt.-% or less, based on the total weight of the ceramic fibers.

The ceramic fibers may further contain 0 to 20 wt.-% of silica, preferably 1 to 20 wt.-% of silica, more preferably 1 to 15 wt.-% of silica, even more preferably 1 to 10 wt.-% of silica, still more preferably 2 to 6 wt.-% of silica, based on the total weight of the ceramic fibers.

It is preferred that these ceramic fibers contain less than 2 wt.-% of components other than silica and alumina, preferably less than 1 wt.-% of components other than silica and alumina, even more preferably less than 0.5 wt.-% of components other than silica and alumina, based on the total weight of the ceramic fibers.

b) ceramic fibers containing 2 to less than 80 wt.-% alumina:

This second type of ceramic fibers typically contains 2 to less than 80 wt.-% alumina, preferably 15 to less than 80 wt.-% alumina, more preferably 20 to 75 wt.-% alumina, based on the total weight of the ceramic fibers.

The ceramic fibers may further contain 10 to 98 wt.-% of silica, preferably 15 to 90 wt.-% of silica, more preferably 20 to 85 wt.-% of silica, even more preferably 25 to 80 wt.-% of silica, based on the total weight of the ceramic fibers.

For example, the ceramic fibers may contain 30 to 35 wt.-% of alumina, 50 to 55 wt.-% of silica and a total of $ZrO_2$, $Fe_2O_3$, $TiO_2$, MgO and CaO of 4 to 20 wt.-%, based on the total weight of the ceramic fibers. Alternatively, the ceramic fibers may contain 42 to 48 wt.-% of alumina and 52 to 58 wt.-% of silica, based on the total weight of the ceramic fibers. Furthermore, the ceramic fibers may contain 28 to 32 wt.-% of alumina, 52 to 56 wt.-% of silica and 14 to 18 wt.-% of $ZrO_2$, based on the total weight of the ceramic fibers. Alternatively, the ceramic fibers contain 22 to 34 wt.-% of alumina and 66 to 78 wt.-% of silica, based on the total weight of the ceramic fibers. In a further alternative example, the ceramic fibers contain 66 to 78 wt.-% of alumina, 22 to 34 wt.-% of silica, based on the total weight of the ceramic fibers.

It is preferred that these ceramic fibers contain less than 2 wt.-% of components other than those indicated above, preferably less than 1 wt.-% of components other than those indicated above, even more preferably less than 0.5 wt.-% of components other than those indicated above, based on the total weight of the ceramic fibers.

c) ceramic fibers containing less than 2 wt.-% alumina

Ceramic fibers of this type typically contain less than 2 wt.-% alumina, preferably less than 1 wt.-% alumina, more preferably less than 0.5 wt.-% alumina, based on the total weight of the ceramic fibers. Alumina may even be absent from these ceramic fibers.

These ceramic fibers typically further contain 50 to 85 wt.-% silica and 15 to 50 wt.-% alkaline earth metal oxide, preferably 55 to 85 wt.-% silica and 15 to 45 wt.-% alkaline earth metal oxide, more preferably 60 to 82 wt.-% silica and 18 to 40 wt.-% alkaline earth metal oxide, based on the total weight of the ceramic fibers. Alternatively, ceramic fibers of this type may contain 55 to 72 wt.-% silica and 28 to 45 wt.-% alkaline earth metal oxide, preferably 60 to 70 wt.-% silica and 30 to 40 wt.-% alkaline earth metal oxide, based on the total weight of the ceramic fibers. Another type of these ceramic fibers contains 65 to 85 wt.-% silica and 15 to 35 wt.-% alkaline earth metal oxide, preferably 70 to 80 wt.-% silica and 20 to 30 wt.-% alkaline earth metal oxide, based on the total weight of the ceramic fibers.

The alkaline earth metal oxide is preferably selected from MgO and CaO or a combination thereof, wherein the ratio of the CaO in the alkaline earth metal oxide is preferably 75 wt.-% or more, more preferably 85 wt.-% or more, based on the total amount of alkaline earth metal oxide.

In any of the ceramic fibers described herein, the content of any components of the ceramic fibers other than those indicated is preferably less than 2 wt.-%, more preferably less than 1 wt.-%, still more preferably less than 0.5 wt.-%, based on the total weight of the ceramic fibers.

The glass fibers

Several types of glass fibers are known, such as A-glass, C-glass, D-glass, E-glass, M-glrass and S-glass. In the present invention, E-glass is preferably used. E- and S-glass fibers usually have a low (MgO + $Al_2O_3$) content, while their content in R-glass fibers is typically least 25 wt.-%.

E-glass typically comprises 50 to 60 wt.-% $SiO_2$, 10 to 18 wt.-% $Al_2O_3$, 0 to 8 wt.-% MgO, 12 to 28 wt.-% CaO, and 2 to 15 wt.-% $B_2O_3$. E-glass preferably comprises 52 to 56 wt.-% $SiO_2$, 12 to 16 wt.-% $Al_2O_3$, 0 to 6 wt.-% MgO, 15 to 25 wt.-% CaO, and 4 to 13 wt.-% $B_2O_3$. Such E-glass may also be referred to as an alumino-borosilicate glass. E-glass may further comprise alkaline oxides, in particular $Na_2O$ and $K_2O$. However, the content of alkaline oxides is typically limited to 3 wt.-% or less, preferably 2 wt.-% or less, more preferably 1 wt.-% less.

The melamine fibers

The melamine fibers preferably contain at least 50 wt.-%, preferably 60 wt.-%, more preferably 70 wt.-%, even more preferably 80 wt.-%, still more preferably 90 wt.-% or even 95 or 98 wt.-% polymer units derived from the reaction of melamine and formaldehyde. Most preferred melamine fibers contain 99 wt.-% melamine resin.

The solvent

The organic solvent used in the method of the present invention is typically a hydrocarbon solvent, preferably selected from $C_{3-16}$ saturated, unsaturated or partially saturated hydrocarbons or mixtures thereof, more preferably selected from $C_{3-10}$ saturated straight, branched or cyclic hydrocarbons or mixtures thereof, even more preferably selected from $C_{3-10}$ linear or branched alkanes or mixtures thereof, still more preferably selected from $C_{5-7}$ linear or branched alkanes or mixtures thereof, still even more preferably selected from hexanes or heptanes or mixtures thereof, most preferably n-hexane.

Alternatively, the organic solvent used in the present invention is an alcohol solvent, preferably selected from $C_{2-12}$ saturated, unsaturated or partially saturated alcohols or mixtures thereof, more preferably selected from $C_{2-12}$ saturated straight, branched or cyclic alcohols or mixtures thereof, even more preferably selected from $C_{2-12}$ saturated straight, branched or cyclic monohydric alcohols or mixtures thereof, still more preferably selected from $C_{2-6}$ saturated straight, branched or cyclic monohydric alcohols (such as ethanol, 1-propanol, 2-propanol, butanols, pentanols (including cyclopentanol) or hexanols (including cyclohexanol)) or mixtures thereof, still even more preferably selected from propanols or mixtures thereof, most preferably 2-propanol. The organic solvent used in the present invention is preferably an alcohol solvent.

Furthermore, the organic solvent may be a mixture of one or more hydrocarbon solvent(s) and one or more alcohol solvent(s) indicated above.

The aerogel

The aerogel may be any inorganic aerogel. Preferably, it comprises or consists of one or more selected from silicon oxide, aluminum oxide, zirconium oxide, titanium oxide, hafnium oxide and yttrium oxide. More preferably, the aerogel comprises or consists of silicon oxide. Even more preferably the aerogel is silica aerogel.

The aerogel typically has a porosity of 85% or higher, more preferably a porosity of 90% or higher, as determined by isotherm adsorption and desorption. More specifically, porosity is determined by measuring pore volume and pore size distribution of aerogel by using the BJH (Barret-Joyner-Halenda) adsorption and desorption isotherm method.

The specific surface area of the aerogel is typically 300 $m^2$/g or higher. Preferably it is 400 $m^2$/g or higher, preferably 500 $m^2$/g or higher, preferably 600 $m^2$/g or higher, and preferably 2000 $m^2$/g or less, more preferably 1500 $m^2$/g or less, even more preferably 1000 $m^2$/g or less, still more preferably 800 $m^2$/g or less, as determined by DIN ISO 9277 2003-05 (Determination of the specific surface area of solids by gas adsorption using the BET method).

In the present invention, it is preferable that the powder of the aerogel has a median particle size (d50) in the range of 1 to 50 $\mu$m, preferably 5 to 40 $\mu$m, more preferably 10 to 30 $\mu$m, even more preferably 15 to 25 $\mu$m, as measured by laser diffraction, preferably using a Malvern Mastersizer.

The powder of the aerogel may, e.g., be obtained from a heterophase reaction. In such a case, it is preferred that the powder of the aerogel is silica aerogel powder obtained by mixing and reacting de-ionized water, water glass, an organosilane compound, an inorganic acid, and an organic solvent, which is preferably a non-polar organic solvent, to obtain silica hydrogel primary particles. The silica hydrogel primary particles are then solvent-substituted and the solvent-substituted gel particles are dried under ambient pressure to obtain silica aerogel powder. It is preferred that no further grinding or sieving treatment is performed. Such a heterophase reaction method is known to the skilled person and, e.g., described in EP 2 722 311.

The aerogel powder is preferably prepared in the form of particles instead of a monolith. Thus, preferable the aerogel powder used in the present invention has been obtained by a process which does not include grinding of the aerogel material. More preferably, the aerogel powder is in the form of primary particles (optionally including secondary particles). Accordingly, no grinding or sieving treatment is needed for generating the aerogel powder. Furthermore, it is preferred that the aerogel powder is dried under ambient pressure, e.g. 1 atm, instead of using a supercritical drying process which is sometimes employed in the production of aerogel according to the prior art.

The aerogel composition

The aerogel composition comprises the aerogel powder, the melamine-formaldehyde resin and the organic solvent. The aerogel composition preferably further contains water. The water content in the aerogel composition is preferably in the range of from 1 to 30 wt.%, more preferably in the range of from 3 to 22 wt.%, even more preferably in the range of from 5 to 20 wt.%, still more preferably in the range of from 8 to 18 wt.%, still even more preferably in the range of from 11 to 17 wt.%, based on the total weight of the aerogel composition. It is to be understood that the aerogel composition may contain further components. To achieve efficient distribution of the aerogel powder and the melamine-formaldehyde resin in the fibrous article, the aerogel composition is preferably a dispersion of the aerogel powder and the melamine-formaldehyde resin in the organic solvent (and optionally the water). The organic solvent is preferably an alcohol solvent as defined above.

The aerogel composition typically contains 2 to 20 wt.-% aerogel, preferably 4 to 15 wt.-% aerogel, more preferably 5 to 12 wt.-% aerogel, even more preferably 6 to 10 wt.-% aerogel, based on the total weight of the aerogel composition. The aerogel composition furthermore typically contains 0.1 to 20 wt.-% melamine-formaldehyde resin, preferably 0.1 to 10 wt.-% melamine-formaldehyde resin, more preferably 0.5 to 8 wt.-% aerogel melamine-formaldehyde resin, even more preferably 1 to 7 wt.-% melamine-formaldehyde resin, based on the total weight of the aerogel composition. The remainder is preferably the organic solvent and optionally water.

The aerogel composition is preferably obtained by mixing a composition A comprising the aerogel and a first solvent with a composition B comprising the melamine-formaldehyde resin and a second solvent. The first solvent preferably contains at least 90 wt.-% isopropanol. The second solvent is preferably a mixture of isopropanol and water and more preferably contains 40 to 80 wt.-% isopropanol and 60 to 20 wt.-% water, preferably 50 to 80 wt.-% isopropanol and 50 to 20 wt.-% water, more preferably 60 to 70 wt.-% isopropanol and 40 to 30 wt.-% water. The weight ratio of composition A to composition B is preferably in a range of from 20:1 to 1:2, more preferably from 15:1 to 1:1, even more preferably from 10:1 to 1:1, still more preferably from 7:1 to 1:1. Accordingly, the water content in the aerogel composition is preferably in the range of from 1 to 30 wt.%, more preferably in the range of from 3 to 22 wt.%, even more preferably in the range of from 5 to 20 wt.%, still more preferably in the range of from 8 to 18 wt.%, still even more preferably in the range of from 11 to 17 wt.%, based on the total weight of the aerogel composition.

The weight ratio of the aerogel to the melamine-formaldehyde resin in the aerogel composition is preferably in a range of from 1:10 to 100:1, more preferably from 1:5 to 50:1, even more preferably from 1:2 to 20:1, still more preferably from 1:2 to 10:1, most preferably from 1:1 to 8:1 or even from 1:1 to 7:1. The same ratio applies preferably also to the composite article.

It is preferred that the combined content of aerogel powder, melamine-formaldehyde resin and organic solvent, and optionally water, in the aerogel composition is 90 wt.-% or more, preferably 95 wt.-% or more, more preferably 97 wt.-% or more, even more preferably 98 wt.-% or more, still more preferably 99 wt.-% or more, most preferably 99.5 wt.-% or more, or even 99.8 wt.-% or more, based on the total weight of the aerogel composition.

Alternatively, if the method involves the use of inorganic opacifiers and/or mineral fillers, the aerogel composition is preferably a dispersion of the aerogel powder, the melamine-formaldehyde resin, inorganic opacifiers and/or mineral fillers in the organic solvent. Other components may or may not be contained in the aerogel composition. The inorganic opacifiers typically comprise or consist of one or more selected from iron oxide, zirconium oxide, titanium oxide, silicon carbide and graphite (graphite preferably being contained in the composite article in an amount of less than 5 wt.-%, preferably less than 2 wt.-%, more preferably less than 1 wt.-% based on the total weight of the composite article). Among these, iron oxide, zirconium oxide, titanium oxide and/or silicon carbide are preferred. Preferably the inorganic opacifiers comprise or consist of one or more selected from iron oxide, zirconium oxide and silicon carbide, more preferably wherein the inorganic opacifier is iron oxide or silicon carbide.

The mineral fillers preferably comprise or consist of one or more selected from metal hydroxides and hydrated carbonates. Preferably, the mineral fillers comprise or consist of one or more selected from aluminum hydroxides, magnesium hydroxides, hydromagnesites and hydrocalcites. More preferably, the mineral fillers are one or both selected from magnesium dihydroxide and aluminum trihydroxide.

It is preferred that the inorganic opacifiers and the mineral fillers are not in the form of aerogel(s). It is in particular preferred that the bulk density of the inorganic opacifiers, and more preferably also of the mineral fillers, is at least 0.1 $g/cm^3$, tested according to DIN EN ISO 787-11 and/or that the specific surface area of the inorganic opacifiers, and more preferably also of the mineral fillers, is 300 $m^2/g$ or less, tested according to DIN ISO 9277 2003-05 (BET method). Alternatively or in addition, is furthermore preferred that the inorganic opacifiers, and more preferably also the mineral fillers, are chemically different from the material used as the aerogel. It is to be understood that any combination of the inorganic opacifiers, and of the mineral fillers, mentioned herein may be used.

In the case of containing inorganic opacifiers and/or mineral fillers, the aerogel composition preferably contains 4 to 15 wt.-% aerogel, more preferably 5 to 12 wt.-% aerogel, even more preferably 6 to 10 wt.-% aerogel, based on the total weight of the aerogel composition, and preferably 0.1 to 10 wt.-% melamine-formaldehyde resin, more preferably 0.5 to 8 wt.-% aerogel melamine-formaldehyde resin, even more preferably 1 to 7 wt.-% melamine-formaldehyde resin, based on the total weight of the aerogel composition, the remainder preferably being organic solvent, optional water and inorganic opacifiers and mineral fillers.

In the case of containing inorganic opacifiers and/or mineral fillers, the combined content of aerogel powder, the melamine-formaldehyde resin and organic solvent, and optional water, in the aerogel composition is typically 50 wt.-% or more, preferably 75 wt.-% or more, more preferably 85 wt.-% or more. Furthermore, the combined content of inorganic opacifiers and mineral fillers in the aerogel composition is typically 50 wt.-% or less, preferably 25 wt.-% or less, more preferably 15 wt.-% or less, based on the total weight of the aerogel composition.

The composite article obtainable by the method

The present invention furthermore relates to a composite article obtainable by the method according to the present invention. It is to be understood that this composite article exhibits the properties resulting from the method of the present invention. Accordingly, any of the features set out herein with respect to the method of the invention, including any preferred ranges, also apply with respect to the composite article of the present invention.

For example, the composite article preferably contains 15 to 70 wt.-% aerogel based on the total weight of the composite article. More preferred is 20 to 60 wt.-%, still more preferred is 30 to 50 wt.-% aerogel based on the total weight of the composite article.

The composite article preferably contains 0.1 to 20 wt.-% melamine resin based on the total weight of the composite article. More preferred is 0.5 to 15 wt.-%, even more preferred is 1 to 12 wt.-%, still more preferred is 3 to 10 wt.-% aerogel based on the total weight of the composite article.

The thickness of the composite article is preferably in the range of 0.1 mm to 500 mm. Generally, it is preferred that the composite article has a thickness of 1 to 30 mm.

It is to be understood that any known fillers may be contained in the composite article of the present invention without any particular limitation. However, the composite article contains preferably less than 15% by weight organic compounds other than the melamine resin and preferably less than 10% by weight binder other than the melamine resin. The composite article preferably exhibits a total weight loss, in thermogravimetric analysis (TGA) when being heated in a nitrogen atmosphere from 30°C to 1100°C with temperature ramp of 10 °C/min, of less than 35% by weight (preferably not taking into account the melamine resin).

Preferably at least 50% of the fibers in the composite article have a length of 5 mm or more. It is furthermore preferred that the weight ratio of the one or more aerogels to the one or more fibers (aerogel/fiber) in the composite article is 1:8 or higher. As will be understood, the composite article may further comprise inorganic opacifiers and/or mineral fillers as specified herein.

The composite article may be defined in further ways, either by referring to its method of production or to its properties.

Accordingly, the composite article of the present invention may be defined as comprising aerogel particles, a melamine resin and fibers, wherein the fibers are one or more selected from ceramic fibers, glass fibers and melamine fibers, and wherein the composite article is obtainable by injecting an aerogel composition comprising an aerogel powder, a melamine resin and an organic solvent, and optionally inorganic opacifiers and/or mineral fillers, into a fibrous article comprising fibers, and partially or completely removing the organic solvent to obtain the composite article.

In addition or alternatively, the composite article may be defined as comprising aerogel particles, a melamine resin and fibers, wherein the fibers are one or more selected from ceramic fibers, glass fibers and melamine fibers, and wherein one or more of the following requirements (i) to (vii) are fulfilled:

(i) The composite article contains less than 15% by weight organic compounds, based on the total weight of the composite article. The content of organic compounds is preferably less than 10% by weight, more preferably less than 2% by weight, even more preferably less than 5% by weight. In this context, the term organic compound relates to any compounds containing at least one carbon-hydrogen bond, except for the melamine resin.

(ii) At least 50% of the fibers in the composite article have a length of 5 mm or more. Preferably at least 50% of the fibers in the composite article have a length of 10 mm or more. More preferably at least 75% of the fibers in the composite article have a length of 5 mm or more. Even more preferably at least 75% of the fibers in the composite article have a length of 10 mm or more. Still more preferably at least 75% of the fibers in the composite article have a length of 15 mm or more. Most preferably at least 75% of the fibers in the composite article have a length of 20 mm or more.

(iii) The composite article contains less than 10% by weight binder other than the melamine resin, based on the total weight of the composite article. The content of binder other than the melamine resin in the composite article contains less than 10% by weight binder, preferably less than 5% by weight binder, more preferably less than 2% by weight binder, even more preferably less than 1% by weight binder, still more preferably less than 0.5% by weight binder, most preferably less than 0.1% by weight binder.

(iv) The composite article exhibits a total weight loss in thermogravimetric analysis (TGA) when being heated in a nitrogen atmosphere from 30°C to 1100°C with a temperature increase of 10 °C/min of less than 35% by weight. The total weight loss in thermogravimetric analysis is preferably less than 30% by weight, more preferably less than 25% by weight, even more preferably less than 20% by weight, still more preferably less than 15% by weight, most preferably less than 10% by weight, based on the weight of the composite article before the thermogravimetric analysis.

(v) The weight ratio of the one or more aerogels to the one or more fibers (aerogel/fiber) in the composite article is 1:8 or higher. Preferably, the weight ratio of the one or more aerogels to the one or more fibers (aerogel/fiber) in the composite article is higher than 1:8, preferably 1:4 or higher, more preferably 1:2 or higher, even more preferably 1:1 or higher.

(vi) The composite article has a burn-through time of 60 minutes or more. Preferably, the composite article has a burn-through time of 60 minutes or more, preferably 120 minutes or more, even more preferably 180 minutes of more, still more preferably 240 minutes or more. The burn-through resistance is determined using the composite article in the form of a 30 cm x 30 cm sheet with a thickness of 13 mm and treating the composite article at the centre of its first major surface with a flame having a temperature of 1400°C, using a soldering torch, wherein the burn-through time is the duration from start of the flame treatment until the centre of the second major surface reaches a temperature of 1000°C.

(vii) When using the composite article in the form of a 20 cm x 50 cm sheet with a thickness of 13 mm and treating the composite article at the full surface of its first major surface in accordance with the ISO 834 temperature-time curve (ISO 834-8:2002 test with $T = T_0 + 345 \log 10 (8t+1)$; wherein $T_0$ is 20°C) for 180 minutes, the centre of the second major surface has a temperature of less than 1000°C. Preferably, the centre of the second major surface has a temperature of less than 900°C, preferably less than 800°C, more preferably less than 700°C, even more preferably less than 600°C, still more preferably less than 500°C.

In the case of the composite article containing the melamine fibers, features (iv), (vi) and (vii) are preferably not applicable. In the case of the composite article containing the glass fibers, features (vi) and (vii) are preferably not applicable.

The composite article may fulfil one or any number of possible combinations of requirements (i) to (vii). For example, the composite article preferably fulfils requirement (i), or requirement (ii), or requirement (iii), or requirement (iv), or requirement (v), or requirement (vi), or requirement (vii). Alternatively, it is preferred that two requirements be fulfilled, such as (i) and (ii), (ii) and (iii), (iii) and (iv), (iv) and (v), (v) and (vi), (vi) and (vii), (i) and (iii), (ii) and (iv), (iii) and (v), (iv) and (vi), (v) and (vii), (i) and (iv), (ii) and (v), (iii) and (vi), (iv) and (vii), (i) and (v), (ii) and (vi), (iii) and (vii), (i) and (vi), (ii) and (vii), or (i) and (vii). Alternatively, it is preferred that three requirements be fulfilled, such as (i) and (ii) and (iii), (i) and (ii) and (iv), (i) and (ii) and (v), (i) and (ii) and (vi), (i) and (ii) and (vii), (i) and (iii) and (iv), (i) and (iii) and (v), (i) and (iii) and (vi), (i) and (iii) and (vii), (i) and (iv) and (v), (i) and (iv) and (vi), (i) and (iv) and (vii), (i) and (v) and (vi), (i) and (v) and (vii), (i) and (vi) and (vii), (ii) and (iii) and (iv), (ii) and (iii) and (v), (ii) and (iii) and (vi), (ii) and (iii) and (vii), (ii) and (iv) and (v), (ii) and (iv) and (vi), (ii) and (iv) and (vii), (ii) and (v) and (vi), (ii) and (v) and (vii), (ii) and (vi) and (vii), (iii) and (iv) and (v), (iii) and (iv) and (vi), (iii) and (iv) and (vii), (iii) and (v) and (vi), (iii) and (v) and (vii), (iii) and (vi) and (vii), (iv) and (v) and (vi), (iv) and (v) and (vii), (iv) and (vi) and (vii), or (v) and (vi) and (vii). Alternatively, it is preferred that four, five or six of these requirements be fulfilled.

It is to be understood that also the composite article according to these alternative definitions may further comprise inorganic opacifiers and/or mineral fillers. The composite article preferably contains 15 to 70 wt.-% aerogel based on the total weight of the composite article. More preferred is 20 to 60 wt.-%, still more preferred is 30 to 50 wt.-% aerogel based on the total weight of the composite article.

The composite article preferably contains 0.1 to 20 wt.-% melamine resin based on the total weight of the composite article. More preferred is 0.5 to 15 wt.-%, even more preferred is 1 to 12 wt.-%, still more preferred is 3 to 10 wt.-% aerogel based on the total weight of the composite article.

The composite article preferably has a thickness in the range of 3 mm to 500 mm, preferably in the range of 3 to 100 mm, more preferably in the range of 3 to 50 mm, even more preferably in the range of 5 to 30 mm (e.g. in the case of fiber boards). Alternatively, the composite article preferably has a thickness in the range of 0.1 mm to 30 mm, preferably in the range of 0.5 to 10 mm, more preferably in the range of 1 to 3 mm, even more preferably in the range of 1 to less than 3 mm (may also be referred to as a fiber paper). Generally, it is preferred that the composite article has a thickness of 1 to 30 mm. In addition, when the width of the composite article is W, the length of the composite article is L and the thickness of the composite article is T, the following requirement is preferably fulfilled:

$$R = \frac{W \times L}{T^2}$$

wherein R is 100 or more, preferably 1000 or more, more preferably 10000 or more,

> wherein W/L is preferably in a range of 1000/1 to 1/1000,
> wherein W/T is preferably 10 or more, and
> wherein L/T is preferably 10 or more.

It is to be understood that the composite article of the present invention may contain further components, such as inert fillers or pigments, flame retardants, flame and smoke suppressors, binders. These are preferably added by including them in the aerogel composition.

The composite article of the present invention may furthermore be coated with various other materials and/or combined with other materials, such as wovens or laminates, to form further composites.

The present invention may be summarized by the following items:

1. A method for the preparation of a composite article comprising aerogel particles, a melamine resin and fibers, wherein the fibers are one or more selected from ceramic fibers, glass fibers and melamine fibers, the method comprising:

> providing a fibrous article comprising fibers, wherein the fibers are one or more selected from ceramic fibers, glass fibers and melamine fibers,
> providing an aerogel composition comprising an aerogel powder, a melamine-formaldehyde resin and an organic solvent,
> combining the fibrous article and the aerogel composition, and
> partially or completely removing the organic solvent to obtain the composite article.

2. The method for the preparation of a composite article according to item 1, wherein the composite article further comprises inorganic opacifiers and/or mineral fillers, wherein the step of providing an aerogel composition comprising an aerogel powder, a melamine-formaldehyde resin and an organic solvent, is a step of providing an aerogel composition comprising an aerogel powder, a melamine-formaldehyde resin and an organic solvent and inorganic opacifiers and/or mineral fillers.

3. The method for the preparation of a composite article according to item 1 or 2, wherein the fibrous article is selected from batting, nonwovens, mats, felts and needled fiber blankets, wherein the fibrous article is preferably a nonwoven fiber blanket or a needled fiber blanket.

4. The method for the preparation of a composite article according to any one of items 1 to 3, wherein the fibrous article has a density of 20 to 300 kg/m$^3$, preferably 50 to 200 kg/m$^3$, more preferably 80 to 150 kg/m$^3$.

5. The method for the preparation of a composite article according to any one of the preceding items, wherein the ceramic fibers contain 80 wt.-% or more of alumina, preferably 85 wt.-% or more of alumina, preferably 90 wt.-% or more of alumina, preferably 95 wt.-% or more of alumina, based on the total weight of the ceramic fibers, wherein the content of alumina is preferably 99 wt.-% or less, more preferably 98 wt.-% or less, even more preferably 97 wt.-% or more, based on the total weight of the ceramic fibers.

6. The method for the preparation of a composite article according to item 5, wherein the ceramic fibers further contain 0 to 20 wt.-% of silica, preferably 1 to 20 wt.-% of silica, more preferably 1 to 15 wt.-% of silica, even more preferably 1 to 10 wt.-% of silica, still more preferably 2 to 6 wt.-% of silica, based on the total weight of the ceramic fibers.

7. The method for the preparation of a composite article according to item 5, wherein the ceramic fibers contain less than 2 wt.-% of components other than silica and alumina, preferably less than 1 wt.-% of components other than silica and alumina, even more preferably less than 0.5 wt.-% of components other than silica and alumina, based on the total weight of the ceramic fibers.

8. The method for the preparation of a composite article according to any one of items 1 to 4, wherein the ceramic fibers contain 2 to less than 80 wt.-% alumina, preferably 15 to less than 80 wt.-% alumina, more preferably 20 to 75 wt.-% alumina, based on the total weight of the ceramic fibers.

9. The method for the preparation of a composite article according to item 8, wherein the ceramic fibers further contain 10 to 98 wt.-% of silica, preferably 15 to 90 wt.-% of silica, more preferably 20 to 85 wt.-% of silica, even more preferably 25 to 80 wt.-% of silica, based on the total weight of the ceramic fibers.

10. The method for the preparation of a composite article according to item 8 or 9, wherein the ceramic fibers contain 30 to 35 wt.-% of alumina, 50 to 55 wt.-% of silica and a total of $ZrO_2$, $Fe_2O_3$, $TiO_2$, MgO and CaO of 4 to 20 wt.-%, based on the total weight of the ceramic fibers.

11. The method for the preparation of a composite article according to item 8 or 9, wherein the ceramic fibers contain 42 to 48 wt.-% of alumina and 52 to 58 wt.-% of silica, based on the total weight of the ceramic fibers.

12. The method for the preparation of a composite article according to item 8 or 9, wherein the ceramic fibers contain 28 to 32 wt.-% of alumina, 52 to 56 wt.-% of silica and 14 to 18 wt.-% of $ZrO_2$, based on the total weight of the ceramic fibers.

13. The method for the preparation of a composite article according to item 8 or 9, wherein the ceramic fibers contain 22 to 34 wt.-% of alumina, 66 to 78 wt.-% of silica, based on the total weight of the ceramic fibers.

14. The method for the preparation of a composite article according to item 8 or 9, wherein the ceramic fibers contain 66 to 78 wt.-% of alumina, 22 to 34 wt.-% of silica, based on the total weight of the ceramic fibers.

15. The method for the preparation of a composite article according to any one of items 1 to 4, wherein the ceramic fibers contain less than 2 wt.-% alumina, preferably less than 1 wt.-% alumina, more preferably less than 0.5 wt.-% alumina, based on the total weight of the ceramic fibers.

16. The method for the preparation of a composite article according to item 15, wherein the ceramic fibers further contain 50 to 85 wt.-% silica and 15 to 50 wt.-% alkaline earth metal oxide, preferably 55 to 85 wt.-% silica and 15 to 45 wt.-% alkaline earth metal oxide, more preferably 60 to 82 wt.-% silica and 18 to 40 wt.-% alkaline earth metal oxide, based on the total weight of the ceramic fibers.

17. The method for the preparation of a composite article according to item 15, wherein the ceramic fibers further contain 55 to 72 wt.-% silica and 28 to 45 wt.-% alkaline earth metal oxide, preferably 60 to 70 wt.-% silica and 30 to 40 wt.-% alkaline earth metal oxide, based on the total weight of the ceramic fibers.

18. The method for the preparation of a composite article according to item 15, wherein the ceramic fibers further contain 65 to 85 wt.-% silica and 15 to 35 wt.-% alkaline earth metal oxide, preferably 70 to 80 wt.-% silica and 20 to 30 wt.-% alkaline earth metal oxide, based on the total weight of the ceramic fibers.

19. The method for the preparation of a composite article according to any one of items 16 to 18, wherein the alkaline earth metal oxide is selected from MgO and CaO or a combination thereof, wherein the content of the CaO in the alkaline earth metal oxide is preferably 75 wt.-% or more, more preferably 85 wt.-% or more, based on the total amount of alkaline earth metal oxide.

20. The method for the preparation of a composite article according to any one of items 8 to 14 and 16 to 19, wherein the content of content of any components of the ceramic fibers other than those indicated in the respective items is less than 2 wt.-%, preferably less than 1 wt.-%, even more preferably less than 0.5 wt.-%, based on the total weight of the ceramic fibers.

21. The method for the preparation of a composite article according to any one of items 1 to 20, wherein the glass fibers comprise 50 to 60 wt.-% $SiO_2$, 10 to 18 wt.-% $Al_2O_3$, 0 to 8 wt.-% MgO, 12 to 28 wt.-% CaO, 2 to 15 wt.-% $B_2O_3$ and 0 to 3 wt% of a total of alkali metal oxides, preferably 52 to 56 wt.-% $SiO_2$, 12 to 16 wt.-% $Al_2O_3$, 0 to 6 wt.-% MgO, 15 to 25 wt.-% CaO, 4 to 13 wt.-% $B_2O_3$ and 0 to 3 wt% of a total of alkali metal oxides.

22. The method for the preparation of a composite article according to any one of items 1 to 20, wherein the melamine fibers comprise at least 50 wt.-%, preferably 60 wt.-%, more preferably 70 wt.-%, even more preferably 80 wt.-%, still more preferably 90 wt.-% or even 95 or 98 wt.-% polymer units derived from the reaction of melamine and formaldehyde.

23. The method for the preparation of a composite article according to any one of items 1 to 22, wherein the melamine fibers comprise 99 wt.-% or more melamine resin.

24. The method for the preparation of a composite article according to any one of items 1 to 23, wherein 50 wt.-% or more, preferably 60 wt.-%, more preferably 70 wt.-%, even more preferably 80 wt.-%, still preferably 90 wt.-% or more, even still more preferably 95 wt.-% or more, or even more 98 wt.-% or more, or even more preferably all of the fibers are ceramic fibers.

25. The method for the preparation of a composite article according to any one of items 1 to 24, wherein 50 wt.-% or more, preferably 60 wt.-%, more preferably 70 wt.-%, even more preferably 80 wt.-%, still preferably 90 wt.-% or more, even still more preferably 95 wt.-% or more, or even more 98 wt.-% or more, or even more preferably all of the fibers are glass fibers.

26. The method for the preparation of a composite article according to any one of items 1 to 25, wherein 50 wt.-% or more, preferably 60 wt.-%, more preferably 70 wt.-%, even more preferably 80 wt.-%, still preferably 90 wt.-% or more, still even more preferably 95 wt.-% or more, or even more 98 wt.-% or more, or even more preferably all of the fibers are melamine fibers.

27. The method for the preparation of a composite article according to any one of items 1 to 23, wherein the fibers contain ceramic fibers and optionally glass fibers and/or melamine fibers; preferably at least 50 wt.-% of the fibers are ceramic fibers, with the remainder being glass fibers and/or melamine fibers.

28. The method for the preparation of a composite article according to any one of the preceding items, wherein the organic solvent is a hydrocarbon solvent, preferably selected from $C_{3-16}$ saturated, unsaturated or partially saturated hydrocarbons or mixtures thereof, more preferably selected from $C_{3-10}$ saturated straight, branched or cyclic hydrocarbons or mixtures thereof, even more preferably selected from $C_{3-10}$ linear or branched alkanes or mixtures thereof, still more preferably selected from $C_{5-7}$ linear or branched alkanes or mixtures thereof, still even more preferably selected from hexanes or heptanes or mixtures thereof, most preferably n-hexane.

29. The method for the preparation of a composite article according to any one of items 1 to 27, wherein the organic solvent is an alcohol solvent, preferably selected from $C_{2-12}$ saturated, unsaturated or partially saturated alcohols or mixtures thereof, more preferably selected from $C_{2-12}$ saturated straight, branched or cyclic alcohols or mixtures thereof, even more preferably selected from $C_{2-12}$ saturated straight, branched or cyclic monohydric alcohols or mixtures thereof, still more preferably selected from $C_{2-6}$ saturated straight, branched or cyclic monohydric alcohols or mixtures thereof, still even more preferably selected from propanols or mixtures thereof, most preferably 2-propanol.

30. The method for the preparation of a composite article according to any one of the preceding items, wherein the aerogel comprises or consists of one or more selected from silicon oxide, aluminum oxide, zirconium oxide, titanium oxide, hafnium oxide and yttrium oxide, preferably wherein the aerogel comprises or consists of silicon oxide, more preferably wherein the aerogel is silica aerogel.

31. The method for the preparation of a composite article according to any one of the preceding items, wherein the aerogel has a porosity of 85% or higher, more preferably a porosity of 90% or higher, as determined by isotherm adsorption and desorption.

32. The method for the preparation of a composite article according to any one of the preceding items, wherein the aerogel has a specific surface area of 300 $m^2$/g or higher, preferably 400 $m^2$/g or higher, preferably 500 $m^2$/g or higher, preferably 600 $m^2$/g or higher, and preferably 2000 $m^2$/g or less, more preferably 1500 $m^2$/g or less, even more preferably 1000 $m^2$/g or less, as determined by DIN ISO 9277 2003-05 (Determination of the specific surface area of solids by gas adsorption using the BET method).

33. The method for the preparation of a composite article according to any one of the preceding items, wherein the powder of the aerogel has a median particle size (d50) in the range of 1 to 50 $\mu$m, preferably 5 to 40 $\mu$m, more preferably 10 to 30 $\mu$m, even more preferably 15 to 25 $\mu$m, as measured by laser diffraction, preferably using a Malvern Mastersizer.

34. The method for the preparation of a composite article according to any one of the preceding items, wherein the powder of the aerogel is obtained from a heterophase reaction.

35. The method for the preparation of a composite article according to any one of the preceding items, wherein the powder of the aerogel is silica aerogel powder obtained by mixing and reacting de-ionized water, water glass, an organosilane compound, an inorganic acid, and an organic solvent, which is preferably a non-polar organic solvent, to obtain silica hydrogel primary particles, solvent-substituting the silica hydrogel primary particles, and drying the solvent-substitution completed gel particles under ambient pressure to obtain silica aerogel powder, preferably without any further grinding or sieving treatment.

36. The method for the preparation of a composite article according to item 1 or any one of items 3 to 35, wherein the aerogel composition is a dispersion of the aerogel powder and the melamine-formaldehyde resin in the organic solvent.

37. The method for the preparation of a composite article according to item 1 and any one of items 3 to 36, wherein the aerogel composition contains 2 to 20 wt.-% aerogel, preferably 4 to 15 wt.-% aerogel, more preferably 5 to 12 wt.-% aerogel, even more preferably 6 to 10 wt.-% aerogel, based on the total weight of the aerogel composition, and 0.1 to 20 wt.-% melamine-formaldehyde resin, preferably 0.1 to 10 wt.-% melamine-formaldehyde resin, more preferably 0.5 to 8 wt.-% aerogel melamine-formaldehyde resin, even more preferably 1 to 7 wt.-% melamine-formaldehyde resin, based on the total weight of the aerogel composition, the remainder preferably being organic solvent.

38. The method for the preparation of a composite article according to item 1 and any of items 3 to 37, wherein the combined content of aerogel powder, melamine-formaldehyde resin and organic solvent in the aerogel composition is 90 wt.-% or more, preferably 95 wt.-% or more, more preferably 97 wt.-% or more, even more preferably 98 wt.-% or more, still more preferably 99 wt.-% or more, most preferably 99.5 wt.-% or more, or even 99.8 wt.-% or more.

39. The method for the preparation of a composite article according to any one of items 2 to 35, wherein the aerogel composition is a dispersion of the aerogel powder, a melamine-formaldehyde resin, inorganic opacifiers and/or mineral fillers in the organic solvent.

40. The method for the preparation of a composite article according to any one of items 2 to 35 and 39, wherein the inorganic opacifiers comprise or consist of one or more selected from iron oxide, zirconium oxide, titanium oxide, silicon carbide and graphite, preferably wherein the inorganic opacifiers comprise or consist of one or more selected from iron oxide, zirconium oxide, and silicon carbide, more preferably wherein the inorganic opacifier is iron oxide or silicon carbide.

41. The method for the preparation of a composite article according to any one of items 2 to 35, 39 and 40, wherein the mineral fillers comprise or consist of one or more selected from metal hydroxides and hydrated carbonates, preferably wherein the mineral fillers comprise or consist of one or more selected from aluminum hydroxides, magnesium hydroxides, hydromagnesites and hydrocalcites, more preferably wherein the mineral fillers are one or both selected from magnesium dihydroxide and aluminum trihydroxide.

42. The method for the preparation of a composite article according to any one of items 2 to 35 and 39 to 41, wherein the aerogel composition contains 2 to 20 wt.-% aerogel, preferably 4 to 15 wt.-% aerogel, more preferably 5 to 12 wt.-% aerogel, even more preferably 6 to 10 wt.-% aerogel, based on the total weight of the aerogel composition, and 0.1 to 20 wt.-% melamine-formaldehyde resin, preferably 0.1 to 10 wt.-% melamine-formaldehyde resin, more preferably 0.5 to 8 wt.-% aerogel melamine-formaldehyde resin, even more preferably 1 to 7 wt.-% melamine-formaldehyde resin, based on the total weight of the aerogel composition, the remainder preferably being organic solvent and inorganic opacifiers and mineral fillers.

43. The method for the preparation of a composite article according to any one of items 2 to 35 and 39 to 42, wherein the combined content of aerogel powder, the melamine-formaldehyde resin and organic solvent in the aerogel composition is 50 wt.-% or more, preferably 75 wt.-% or more, more preferably 85 wt.-% or more.

44. The method for the preparation of a composite article according to any one of items 2 to 35 and 39 to 43, wherein the combined content of inorganic opacifiers and mineral fillers in the aerogel composition is 50 wt.-% or less, preferably 25 wt.-% or less, more preferably 15 wt.-% or less.

45. The method for the preparation of a composite article according to any one of the preceding items, wherein the fibrous article and the aerogel composition are combined by injecting, or impregnating, or soaking the aerogel composition into the fibrous article.

46. The method for the preparation of a composite article according to any one of the preceding items wherein partially or completely removing the organic solvent to obtain the composite article by drying includes drying at a temperature of 50 to 170°C for 1 to 8 hours, optionally followed by drying at 171°C to 230°C for 1 to 48 hours.

47. The method for the preparation of a composite article according to any one of the preceding items, wherein the composite article contains 15 to 70 wt.-%, preferably 20 to 60 wt.-%, more preferably 30 to 50 wt.-%, aerogel, based on the total weight of the composite article and contains 0.1 to 20 wt.-%, preferably 0.5 to 15 wt.-%, even more preferably 1 to 12 wt.-%, still more preferably 3 to 10 wt.-% melamine resin based on the total weight of the composite article.

48. The method for the preparation of a composite article according to any one of the preceding items, wherein the composite article has a thickness in the range of 0.1 mm to 500 mm, preferably a thickness of 1 to 30 mm.

49. The method for the preparation of a composite article according to any one of the preceding items, wherein when the width of the composite article is W, the length of the composite article is L and the thickness of the composite article is T, the following requirement is fulfilled:

$$R = \frac{W \times L}{T^2}$$

wherein R is 100 or more, preferably 1000 or more, more preferably 10000 or more,

wherein W/L is preferably in a range of 1000/1 to 1/1000,
wherein W/T is preferably 10 or more, and
wherein L/T is preferably 10 or more.

50. The method for the preparation of a composite article according to any one of the preceding items, wherein the composite article contains less than 15% by weight organic compounds, preferably less than 10% by weight organic compounds, more preferably less than 5% by weight organic compounds, wherein the term organic compound relates to any compounds containing at least one carbon-hydrogen bond, except for the melamine resin.

51. The method for the preparation of a composite article according to any one of the preceding items, wherein at least 50% of the fibers in the composite article have a length of 5 mm or more, preferably wherein at least 50% of the fibers in the composite article have a length of 10 mm or more, more preferably wherein at least 75% of the fibers in the composite article have a length of 5 mm or more, even more preferably wherein at least 75% of the fibers in the composite article have a length of 10 mm or more, still more preferably wherein at least 75% of the fibers in the composite article have a length of 15 mm or more, most preferably wherein at least 75% of the fibers in the composite article have a length of 20 mm or more.

52. The method for the preparation of a composite article according to any one of the preceding items, wherein the composite article contains less than 10% by weight binder other than the melamine resin, preferably less than 5% by weight binder other than the melamine resin, more preferably less than 2% by weight binder other than the melamine resin, even more preferably less than 1% by weight binder other than the melamine resin, still more preferably less than 0.5% by weight binder other than the melamine resin, most preferably less than 0.1% by weight binder other than the melamine resin.

53. The method for the preparation of a composite article according to any one of the preceding items, wherein the composite article exhibits a total weight loss, in thermogravimetric analysis (TGA) when being heated in a nitrogen atmosphere from 30°C to 1100°C with temperature ramp of 10 °C/min, of less than 35% by weight, preferably less than 30% by weight, more preferably less than 25% by weight, even more preferably less than 20% by weight, still more preferably less than 15% by weight, most preferably less than 10% by weight.

54. The method for the preparation of a composite article according to any one of the preceding items, wherein the weight ratio of the one or more aerogels to the one or more fibers (aerogel/fiber) in the composite article is 1:8 or higher, preferably 1:4 or higher, more preferably 1:2 or higher, even more preferably 1:1 or higher.

55. A composite article obtainable by the method according to any one of the preceding items.

56. A composite article comprising aerogel particles, a melamine resin and fibers, wherein the fibers are one or more selected from ceramic fibers, glass fibers and melamine fibers, and wherein the composite article is obtainable by injecting, or impregnating, or soaking an aerogel composition comprising an aerogel powder, a melamine-formaldehyde resin and an organic solvent, and optionally inorganic opacifiers and/or mineral fillers, into a fibrous article comprising fibers, and partially or completely removing the organic solvent to obtain the composite article.

57. A composite article comprising aerogel particles, a melamine resin and fibers, wherein the fibers are one or more selected from ceramic fibers, glass fibers and melamine fibers, and wherein one or more of the following requirements (i) to (vii) are fulfilled:

(i) the composite article contains less than 15% by weight organic compounds other than the melamine resin;
(ii) at least 50% of the fibers in the composite article have a length of 5 mm or more;
(iii) the composite article contains less than 10% by weight binder other than the melamine resin;
(iv) the composite article exhibits a total weight loss in thermogravimetric analysis (TGA) when being heated in a nitrogen atmosphere from 30°C to 1100°C with a temperature increase of 10 °C/min of less than 35% by weight;
(v) the weight ratio of the one or more aerogels to the one or more fibers (aerogel/fiber) in the composite article is 1:8 or higher;
(vi) the composite article has a burn-through time of 60 minutes or more, wherein the burn-through resistance is determined using the composite article in the form of a 30 cm x 30 cm sheet with a thickness of 13 mm and treating the composite article at the centre of its first major surface with a flame having a temperature of 1400°C, using a soldering torch, wherein the burn-through time is the duration from start of the flame treatment until the centre of the second major surface reaches a temperature of 1000°C;
(vii) when using the composite article in the form of a 20 cm x 50 cm sheet with a thickness of 13 mm and treating the composite article at the full surface of its first major surface in accordance with the ISO 834 temperature-time curve for 180 minutes, the centre of the second major surface has a temperature of less than 1000°C.

58. The composite article according to item 57, further comprising inorganic opacifiers and/or mineral fillers.

59. The composite article according to item 57 or 58, wherein the composite article contains less than 15% by weight organic compounds, preferably less than 10% by weight organic compounds, more preferably less than 5% by weight organic compounds, wherein the term organic compound relates to any compounds containing at least one carbon-hydrogen bond, except for the melamine resin.

60. The composite article according to any one of items 57 to 59, wherein at least 50% of the fibers in the composite article have a length of 5 mm or more, preferably wherein at least 50% of the fibers in the composite article have a length of 10 mm or more, more preferably wherein at least 75% of the fibers in the composite article have a length of 5 mm or more, even more preferably wherein at least 75% of the fibers in the composite article have a length of 10 mm or more, still more preferably wherein at least 75% of the fibers in the composite article have a length of 15 mm or more, most preferably wherein at least 75% of the fibers in the composite article have a length of 20 mm or more.

61. The composite article according to any one of items 57 to 60, wherein the composite article contains less than 10% by weight binder other than the melamine resin, preferably less than 5% by weight binder other than the melamine resin, more preferably less than 2% by weight binder other than the melamine resin, even more preferably less than 1% by weight binder other than the melamine resin, still more preferably less than 0.5% by weight binder other than the melamine resin, most preferably less than 0.1% by weight binder other than the melamine resin.

62. The composite article according to any one of items 57 to 61, wherein the composite article exhibits a total weight loss in thermogravimetric analysis (TGA) when being heated in a nitrogen atmosphere from 30°C to 1100°C with temperature increase of 10 °C/min of less than 35% by weight, preferably less than 30% by weight, more preferably less than 25% by weight, even more preferably less than 20% by weight, still more preferably less than 15% by weight, most preferably less than 10% by weight.

63. The composite article according to any one of items 57 to 62, wherein the weight ratio of the one or more aerogels to the one or more fibers (aerogel/fiber) in the composite article is higher than 1:8, preferably 1:4 or higher, more preferably 1:2 or higher, even more preferably 1:1 or higher.

64. The composite article according to any one of items 57 to 63, wherein the composite article contains 15 to 70 wt.-%, preferably 20 to 60 wt.-%, more preferably 30 to 50 wt.-% aerogel based on the total weight of the composite article and contains 0.1 to 20 wt.-%, preferably 0.5 to 15 wt.-%, more preferably 1 to 12 wt.-%, still more preferably 3 to 10 wt.-% melamine resin based on the total weight of the composite article.

65. The composite article according to any one of items 57 to 64, wherein the composite article has a thickness in the range of 1 mm to 500 mm, preferably a thickness in the range of 1 to 30 mm.

66. The composite article according to any one of items 57 to 65, wherein the composite article has a burn-through time of 60 minutes or more, preferably 120 minutes or more, even more preferably 180 minutes of more, still more preferably 240 minutes or more.

67. The composite article according to any one of items 57 to 66, when using the composite article in the form of a 20 cm x 50 cm sheet with a thickness of 13 mm and treating the composite article at the full surface of its first major surface in accordance with the ISO 834 temperature-time curve for 180 minutes, the centre of the second major surface has a temperature of less than 900°C, preferably less than 800°C, more preferably less than 700°C, even more preferably less than 600°C, still more preferably less than 500°C.

68. The composite article according to any one of items 57 to 67, wherein, when the width of the composite article is W, the length of the composite article is L and the thickness of the composite article is T, the following requirement is fulfilled:

$$R = \frac{W \times L}{T^2}$$

wherein R is 100 or more, preferably 1000 or more, more preferably 10000 or more,

> wherein W/L is preferably in a range of 1000/1 to 1/1000,
> wherein W/T is preferably 10 or more, and
> wherein L/T is preferably 10 or more.

**EXAMPLES**

**Example 1**

Materials

Aerogel powder (JIOS AeroVa Aerogel Powder, D20 Grade) 2-Propanol (technical grade)
Ceramic fiber paper with raw paper thickness of 1 mm (Insulfrax Paper supplied by Unifrax, contains 55-72 wt. % silica and 28-45 wt. % alkaline earth metal oxide, paper density of 150 kg/m$^3$)
Melamine fiber blanket with raw blanket thickness of 18 mm (Melt-blown melamine nonwoven blanket supplied by smartMELAMINE d.o.o., contains >99% melamine resin)
Ceramic fiber blanket with raw blanket thickness of 3.5 mm (isoTherm S Vlies supplied by Frenzelit, contains >94% $SiO_2$)
Ceramic fiber blanket with raw blanket thickness of 8 mm (isoTherm S Vlies supplied by Frenzelit, contains >94% $SiO_2$)
Melamine-formaldehyde resin (MER-Resin 1.0 HS, supplied by smartMELAMINE d.o.o.) Deionized water (DI-water)
Carbon black N550
Soldering torch (Rotenberger Industrial, Type ROFIRE Piezo 1950, 35429) equipped with a gas cartridge (Rotenberger Industrial, 30% Propane/70% Butane)

Experimental

1. Preparation of blend dispersions containing aerogel powder and melamine-formaldehyde resin

The aerogel was dispersed using a standard lab mixing equipment, more specifically a propeller mixer (Heidolph overhead stirrer RZR2020) in 2-propanol to reach a solid content of 11 wt-%.

A melamine-formaldehyde resin solution in 2-Propanol/DI-water (2:1 weight ratio) with a solid level of 14 wt-% was prepared using the same equipment.

Blend dispersions containing aerogel powder and melamine-formaldehyde resin were prepared by mixing the aerogel dispersion and the Melamine-formaldehyde resin solution to various ratios, as given in Table 1.

|  | 11 wt-% aerogel dispersion [g] | 14 wt-% melamine-formaldehyde resin solution [g] | Weight ratio aerogel:melamine-formaldehyde resin in blend dispersion |
| --- | --- | --- | --- |
| Blend dispersion 1 | 100 | 78 | 1:1 |
| Blend dispersion 1 | 100 | 26 | 3:1 |
| Blend dispersion 1 | 100 | 11 | 7:1 |

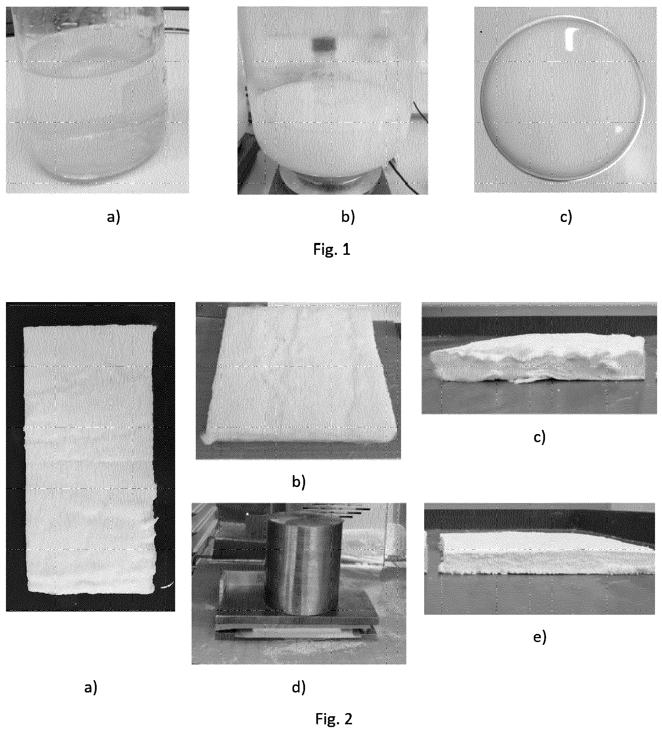

The obtained blend dispersions stay homogeneous without any aggregation of aerogel particles or any coagulation of melamine-formaldehyde resin, as shown in Figure 1.

2. Incorporation of blend dispersion in base materials

The blend dispersions were successfully incorporated in various base materials by impregnation:

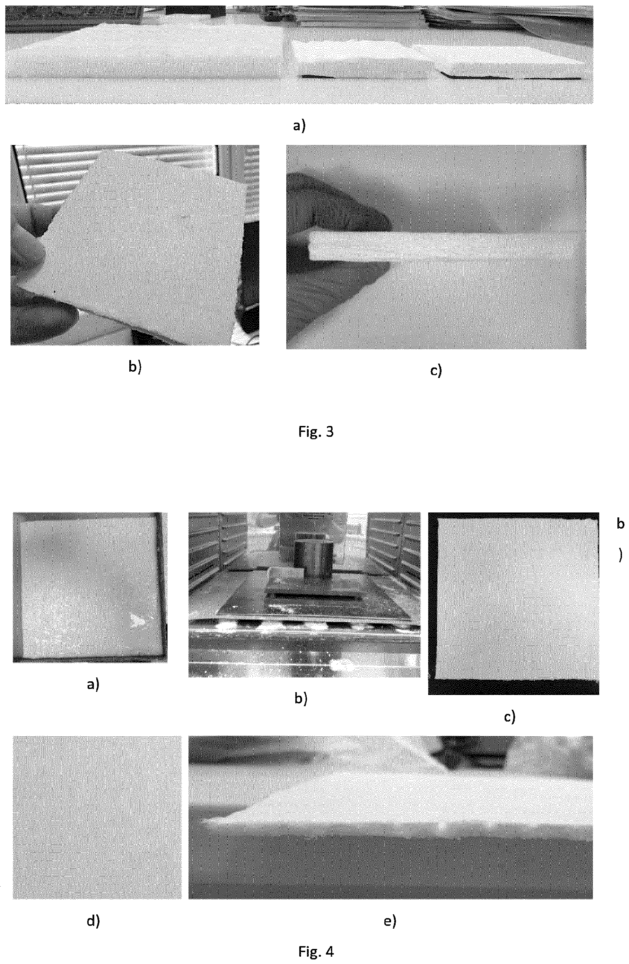

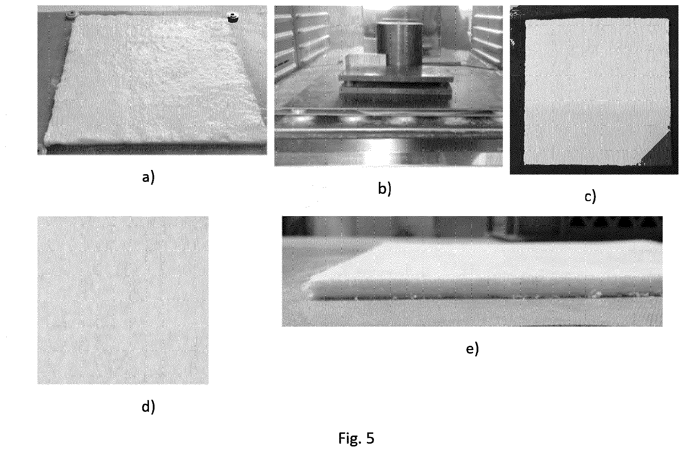

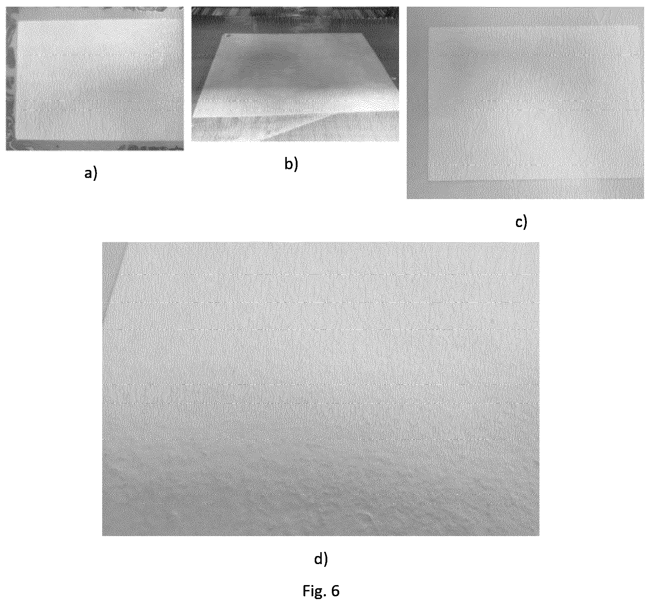

- Melamine fiber blankets (Figures 2 and 3)
- Ceramic fiber blankets (Figures 4 and 5)
- Ceramic fiber papers (Figure 6)

The parameters for the impregnation of blend dispersions are summarized in Table 2:

| Ex. Nr. | Base blanket | | Oven drying/curing | | | Hot press drying/curing | | | Final blanket | | | | |
|---|---|---|---|---|---|---|---|---|---|---|---|---|---|
| | Thick ness [mm] | Description | °C | Pressing | spacer | °C | spacer | [bar] | Aerogel level | Melamine level | Dried thickness [mm] | Thickness at 1,5 kPa [mm | Coating [g/m$^2$] |
| 1 | 1.1 | Ceramic fiber paper | 150 | w/o | | | | | 28.4% | 10.0% | | | |
| 2 | 1.1 | | 150 | w/o | | | | | 29.4% | 4.2% | | | |
| 3 | 3.5 | Ceramic fiber blanket | 150 | w/o | | | | | 40.7% | 5.8% | | | |
| 4 | 18 | Melamine fiber blanket | 150 | w/o | | | | | 56.2% | 8.6% | 16.0 | | |
| 5 | 18 | | 150 | w/o | | | | | 56.5% | 8.6% | 15.3 | | |
| 6 | 18 | | 150 | Pressed | 12 mm | | | | 51.7% | 7.9% | 11.6 | | |
| 7 | 18 | | 150 | Pressed | 12 mm | | | | 50.6% | 7.7% | 11.6 | | |
| 8 | 18 | Blanket obtained in Ex. 6 | 150 | w/o | | | | | 48.9% | 7.5% | 11.6 | | 74.3 |
| 9 | 3.5 | Ceramic fiber blanket | 150 | Pressed | 2.8 mm | | | | 35.7% | 5.3% | | 3.6 | |
| 10 | 3.5 | | 150 | Pressed | 2.8 mm | | | | 38.2% | 5.7% | | 3.4 | |
| 11 | 8 | Ceramic fiber blanket | 110 | Pressed | 6.5 mm | 150 | 5 mm | 20 | 27.0% | 4.0% | 6.0 | | |
| 12 | 8 | | 110 | Pressed | 6.5 mm | 160 | 3 mm | 300 | 23.5% | 3.5% | 4.8 | | |
| 13 | 8 | | 110 | Pressed | 6.5 mm | 160 | 4 mm | 200 | 26.4% | 3.9% | 5.6 | 5.6 | |
| 14 | 8 | | 110 | Pressed | 6.5 mm | 150 | 5 mm | 50 | 23.1% | 3.4% | 6.0 | | |
| 15 | 8 | | 110 | w/o | | 150 | 5 mm | 30 | 28.7% | 4.2% | 6.0 | | |
| 16 | 8 | | 150 | Pressed | 6.5 mm | | | | 23.4% | 3.4% | 6.5 | | |
| 17 | 8 | | 150 | Pressed | 6.5 mm | | | | 23.8% | 3.5% | 6.5 | | |

Representative preparation of aerogel-incorporated melamine fiber blanket:

The blend dispersion 3 (aerogel:melamine-formaldehyde resin = 7:1) was impregnated at room temperature in a melamine fiber blanket by means of soaking the base blanket in the blend dispersion. The obtained prototype was dried immediately after the impregnation in a hot-air oven at 150°C for 4 h. It is to note that the impregnated melamine fiber blankets were dried either without pressure or under pressure, as shown in Figure 2. The blanket dried under pressure illustrates a more homogeneous blanket morphology as well as a more sealed surface, as shown in Figure 3.

Analog to the melamine fiber blankets, ceramic fiber blankets of various thicknesses were also impregnated with the blend dispersion 3. As shown in Figures 4 and 5, the impregnated ceramic fiber blankets, which were dried under pressure, exhibited a homogenous blanket morphology and surface.

It is to be noted that the impregnated 8 mm thick ceramic fiber blankets were dried/cured via two different approaches: i) dried/cured under pressure at 150°C in hot air oven; ii) dried under pressure at 110°C in hot air oven, followed by being cured at 150°C in hot press under various pressures.

The blend dispersion was also impregnated in a very thin base material, 1 mm thick ceramic fiber paper, as shown in Figure 6. The surface of the structurally reinforced aerogel-incorporated ceramic fiber paper possesses a very homogeneous and well sealed surface.

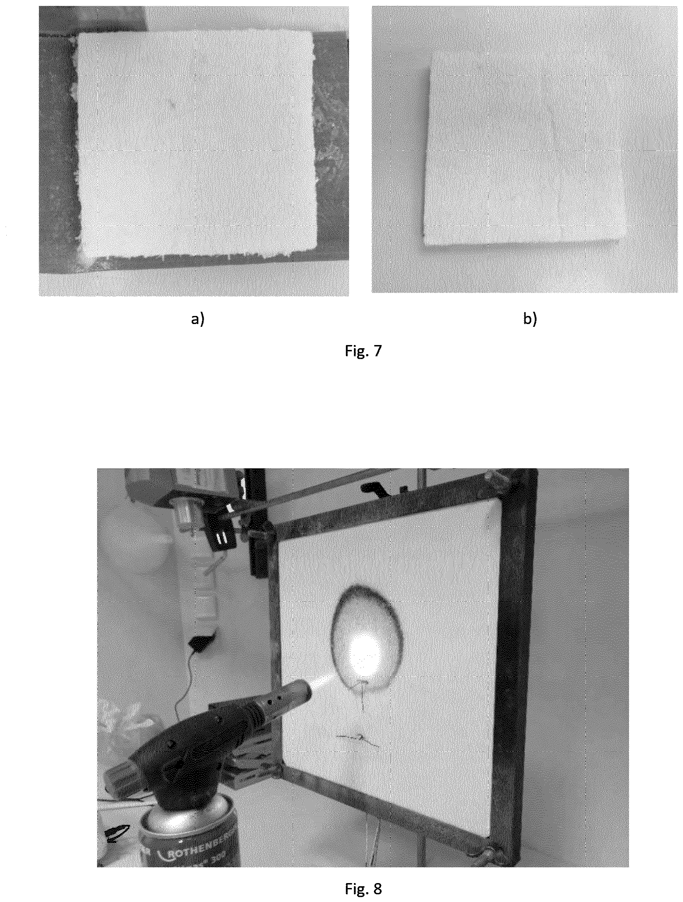

A structurally reinforced aerogel-incorporated melamine fiber blanket was further reinforced by applying melamine-formaldehyde resin on its surface. As shown in Figure 7, the obtained coated prototype of Example 8 illustrates a more sealed surface in comparison to the uncoated blanket.

Results and evaluation

**1. Fire resistance of structurally reinforced aerogel-incorporated materials**

In order to investigate the thermal insulation capability and the resistance to high temperature, a structurally reinforced aerogel-incorporated ceramic fiber blanket (from Example 10) with the thickness of 3.5 mm was exposed to soldering torch flame, as shown in Figure 8. The soldering torch had a flame temperature of around 1350°C. The temperature increases at the back side (non-exposed side) of the blanket was recorded by thermal couples.

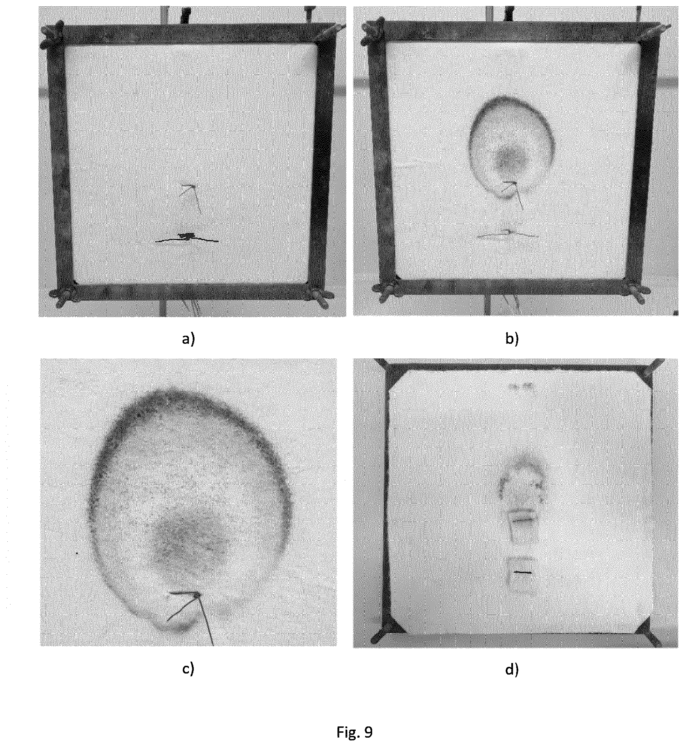

The structurally reinforced aerogel-incorporated ceramic fiber blanket shows high resistance to the torch flame. As shown in Figure 9, the blanket withstood 60 min torching at 1350°C, without any burn-through or cracks being observed. The discoloration at the flame "halo" was attributed to the decomposition of melamine resin and the evaporation of the decomposition by-products.

The thermal insulation capability of the structurally reinforced aerogel-incorporated ceramic fiber blanket was also confirmed, as the max. temperature at the non-exposed side was measured as not exceeding 480°C for the whole test period of 60 min.

The results of the soldering torch test confirm that the structural reinforcement by means of applying melamine resin as binder does not worsen the thermal insulation capability and the resistance to very high temperatures of the aerogel-incorporated inorganic fiber materials.

**2. Dust release behavior of structurally reinforced aerogel-incorporated materials**

A further technical benefit of the structural reinforcement by applying the melamine resin as binder in aerogel-incorporated materials is the improvement of the adhesion among the aerogel particles and the fiber matrix, and thus a lower dust release from the aerogel-incorporated materials can be expected.

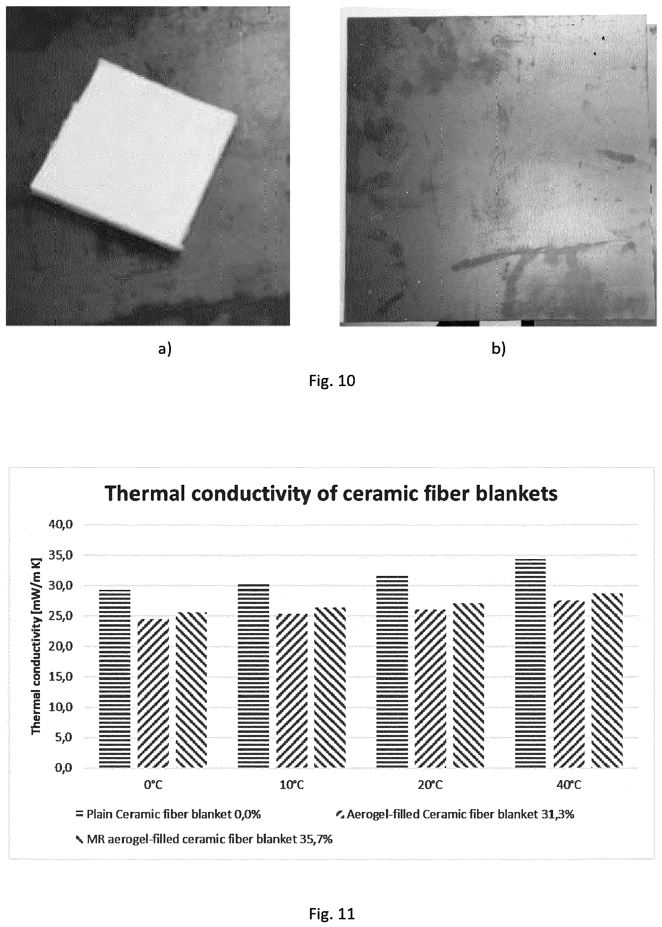

A structurally reinforced aerogel-incorporated melamine fiber blanket with thickness of 11.6 mm (from Example 6) was tested for its dust release behavior under extreme conditions. This blanket was shaken, bended, and punctured on a steel sheet. As shown in Figure 10, only very few coarse particles were observed on the steel sheet, which are no longer airborne. This confirms the structural reinforcement by applying the melamine resin as binder can reduce significantly the dust release from aerogel-incorporated materials.

**3. Thermal conductivity of structurally reinforced aerogel-incorporated materials**

A comparison among the thermal conductivities of an unfilled, an unreinforced aerogel-incorporated and a structurally reinforced aerogel-incorporated ceramic fiber blanket (from Example 9) at 0, 10, 20 and 40°C is given in Figure 11. It can be seen that the incorporation of aerogel particles significantly reduce the thermal conductivity of the blanket. The structural reinforcement by means of applying melamine resin as binder leads to only a very slight increase of thermal conductivity, e.g. by 1 mW/m·K at 0°C.

**4. Compression strength of structurally reinforced aerogel-incorporated materials**

A further technical benefit of the structural reinforcement by applying the melamine resin as binder in aerogel-incorporated materials is the improvement of the material integrity of the composite materials, and thus the higher mechanical strength the aerogel-incorporated materials.

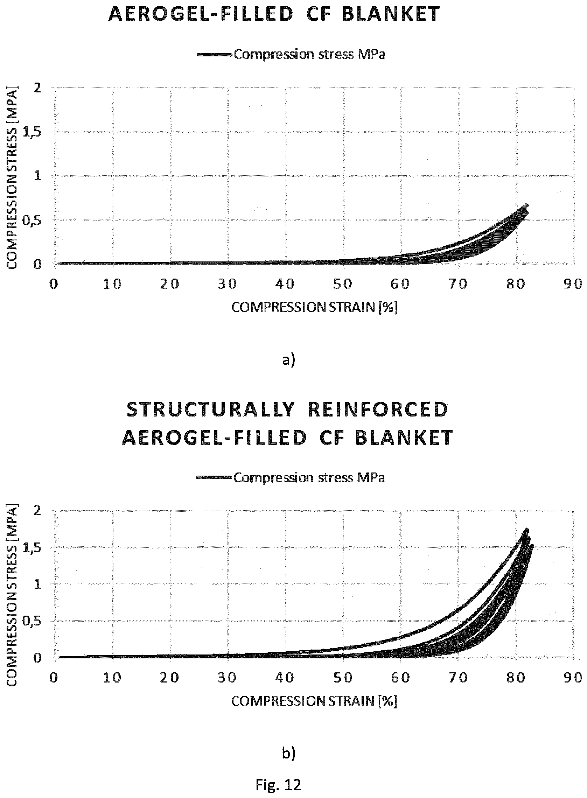

Compression tests on an unreinforced aerogel-incorporated ceramic fiber blanket and a structurally reinforced aerogel-incorporated ceramic fiber blanket (Example 9) with thickness of 3.5 mm were conducted on a material test machine (Galdabini Quasar 5). The blanket specimens were compressed by 80% of their original thicknesses. At a same compression strain of 80%, the structurally reinforced aerogel-incorporated ceramic fiber blanket illustrates a compression stress of 1.6 MPa, while a compression stress of 0.6 MPa was measured for the unreinforced one, as shown in Figure 12. This confirms the structural reinforcement by applying the melamine resin as binder can improve significantly the mechanical strength of aerogel-incorporated materials.

**5. Thermal decomposition behavior of structurally reinforced aerogel-incorporated materials**

Thermal gravimetric analysis (TGA) was performed to compare an aerogel-incorporated ceramic fiber blanket (aerogel level 51%) with a structurally reinforced sample (aerogel level 36%, resin level 5%; Example 9). The analyzed temperature range of TGA was set as 23 to 1100°C, where the analysis atmosphere was nitrogen (from 23 to 600°C) and synthetic air (from 600 to 1100°C), respectively.

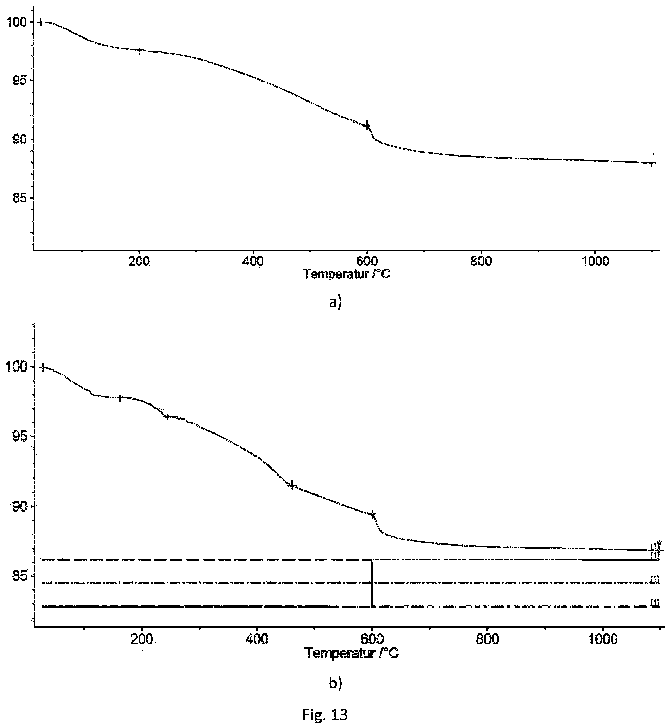

The two blanket specimens showed similar weight loss curves recorded in TGA, as shown in Figure 13. The rest mass of the unreinforced aerogel-incorporated ceramic fiber blanket and the structurally reinforced one was measured as 87.98% and 86.86%, respectively. Two additional decomposition transitions are observed in the reinforced aerogel-incorporated ceramic fiber blanket:

i) 200 to 230°C, and ii) 400 to 450°C, with a weight loss measured by 1.9% higher than the unreinforced sample.

The TGA results confirms that the structural reinforcement by applying the melamine resin as binder to a certain level (like 5%) has a neglectable effect on the thermal decomposition behavior of aerogel-incorporated materials.

Description of methods used for testing

**1 Thermogravimetric analysis (TGA)**

TGA was conducted by using a NETZSCH TG 209 F1 Libra device. The analysed temperature range was 23°C ~ 1100°C. The TGA was conducted in pure nitrogen (from 23°C to 600°C) and in synthetic air (from 600°C to 1100°C). The weight loss was recorded during the whole analysis.

**2 Fire resistance test**

In order to study the fire resistance performance, soldering torch test was conducted. The specimens were cut into a dimension of 30x30 cm and were exposed to a soldering torch (Rotenberger Industrial, Type ROFIRE Piezo 1950, 35429) equipped with a gas cartridge (Rotenberger Industrial, 30% Propane/70% Butane), whose flame temperature is in the range of 1300 - 1400°C. On the back side (non-flamed side) of the specimen, thermal couples (type K) were installed in the middle location to record the temperature increase.

**3 Thermal conductivity**

Thermal conductivity was measured according to the standard DIN EN 12667 by using the heat flow meter method with a LaserComp Fox 200 device. The specimens were cut into a dimension of 20x20 cm and their thermal conductivity at 0, 10, 20 and 40°C were recorded as results.

**4 Compression test**

Compression test was performed according to the standard ASTM D 1056 by using a Galdabini test device. The specimens were cut into cylindrical samples with a diameter of 29 mm. A defined preload was reached, and the initial height of the sample was measured. The sample was compressed by 80% of its initial height at a velocity of 20 mm/min. Then the sample was decompressed until 0.1 N is reached. Another 4 compression cycles were repeated on the same sample. Compression stress and strain were recorded.

**Claims**

1. A method for the preparation of a composite article comprising aerogel particles, a melamine resin and fibers, wherein the fibers are one or more selected from ceramic fibers, glass fibers and melamine fibers, and the method comprising:

    providing a fibrous article comprising fibers, wherein the fibers are one or more selected from ceramic fibers, glass fibers and melamine fibers,
    providing an aerogel composition comprising an aerogel powder, a melamine-formaldehyde resin and an organic solvent,
    combining the fibrous article and the aerogel composition, and
    partially or completely removing the organic solvent to obtain the composite article.

2. The method for the preparation of a composite article according to claim 1, wherein the ceramic fibers contain 80 wt.-% or more of alumina, wherein the ceramic fibers contain less than 2 wt.-% of components other than silica and alumina, based on the total weight of the ceramic fibers.

3. The method for the preparation of a composite article according to claim 1, wherein the ceramic fibers contain 2 to less than 80 wt.-% alumina and 10 to 98 wt.-% of silica, based on the total weight of the ceramic fibers.

4. The method for the preparation of a composite article according to claim 1, wherein the ceramic fibers contain less than 2 wt.-% alumina, and contain 50 to 85 wt.-% silica and 15 to 50 wt.-% alkaline earth metal oxide.

5. The method for the preparation of a composite article according to any one of the preceding claims, wherein the organic solvent is an alcohol solvent.

6. The method for the preparation of a composite article according to any one of the preceding claims, wherein the aerogel is silica aerogel.

7. The method for the preparation of a composite article according to any one of the preceding claims, wherein the aerogel has a porosity of 85% or higher, as determined by isotherm adsorption and desorption.

8. The method for the preparation of a composite article according to any one of the preceding claims, wherein the aerogel has a specific surface area of 300 $m^2$/g or higher, as determined by DIN ISO 9277 2003-05 (Determination of the specific surface area of solids by gas adsorption using the BET method).

9. The method for the preparation of a composite article according to any of the preceding claims, wherein the aerogel composition is a dispersion of the aerogel powder, a melamine-formaldehyde resin and a melamine-formaldehyde resin in the organic solvent, and the combined content of aerogel powder, melamine-formaldehyde resin and organic solvent in the aerogel composition is 90 wt.-% or more, based on the total weight of the aerogel composition.

10. The method for the preparation of a composite article according to any one of the preceding claims, wherein the fibrous article and the aerogel composition are combined by injecting, impregnating, or soaking the aerogel composition into the fibrous article.

11. The method for the preparation of a composite article according to any one of the preceding claims, wherein the composite article contains 15 to 70 wt.-% aerogel and 0.1 to 20 wt.-% melamine resin, based on the total weight of the composite article.

12. The method for the preparation of a composite article according to any one of the preceding claims, wherein at least 50% of the fibers in the composite article have a length of 10 mm or more.

13. The method for the preparation of a composite article according to any one of the preceding claims, wherein the weight ratio of the one or more aerogels to the one or more fibers (aerogel/fiber) in the composite article is 1:4 or higher.

14. A composite article comprising aerogel particles, a melamine resin and fibers, wherein the fibers are one or more selected from ceramic fibers, glass fibers and melamine fibers, and wherein one or more of the following requirements (i) to (vii) are fulfilled:

(i) the composite article contains less than 15% by weight organic compounds other than the melamine resin;

(ii) at least 50% of the fibers in the composite article have a length of 5 mm or more;

(iii) the composite article contains less than 10% by weight binder other than the melamine resin;

(iv) the composite article exhibits a total weight loss in thermogravimetric analysis (TGA) when being heated in a nitrogen atmosphere from 30°C to 1100°C with a temperature increase of 10 °C/min of less than 35% by weight;

(v) the weight ratio of the one or more aerogels to the one or more fibers (aerogel/fiber) in the composite article is 1:8 or higher;

(vi) the composite article has a burn-through time of 60 minutes or more, wherein the burn-through resistance is determined using the composite article in the form of a 30 cm x 30 cm sheet with a thickness of 13 mm and treating the composite article at the centre of its first major surface with a flame having a temperature of 1400°C, using a soldering torch, wherein the burn-through time is the duration from start of the flame treatment until the centre of the second major surface reaches a temperature of 1000°C;

(vii) when using the composite article in the form of a 20 cm x 50 cm sheet with a thickness of 13 mm and treating the composite article at the full surface of its first major surface in accordance with the ISO 834 temperature-time curve for 180 minutes, the centre of the second major surface has a temperature of less than 1000°C.

**15.** A composite article obtainable by the method according to any one of claims 1 to 13.

a)　　　　　　　　　b)　　　　　　　　　c)

Fig. 1

a)　　　　　　　　　b)　　　　　　　　　c)

d)　　　　　　　　　e)

Fig. 2

a)

b)

c)

Fig. 3

a)

b)

b
)

c)

d)

e)

Fig. 4

a)

b)

c)

d)

e)

Fig. 5

Fig. 6

a)                                          b)

Fig. 7

Fig. 8

a)

b)

c)

d)

Fig. 9

a)                                          b)

Fig. 10

**Thermal conductivity of ceramic fiber blankets**

≡ Plain Ceramic fiber blanket 0,0%          ⬚ Aerogel-filled Ceramic fiber blanket 31,3%

⬚ MR aerogel-filled ceramic fiber blanket 35,7%

Fig. 11

## AEROGEL-FILLED CF BLANKET

———Compression stress MPa

a)

## STRUCTURALLY REINFORCED AEROGEL-FILLED CF BLANKET

———Compression stress MPa

b)

Fig. 12

a)

b)

Fig. 13

Europäisches
Patentamt

European
Patent Office

Office européen
des brevets

# EUROPEAN SEARCH REPORT

Application Number

EP 22 19 4399

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2007/259979 A1 (LEE JE KYUN [US]) 8 November 2007 (2007-11-08) * paragraphs [0033] – [0035], [0085], [0006]; examples 1,2 * | 1-15 | INV. C04B26/12 C08J5/18 |
| A | US 2012/142802 A1 (STEINKE TOBIAS HEINZ [DE] ET AL) 7 June 2012 (2012-06-07) * paragraphs [0028] – [0034], [0108], [0122]; claims 1,3,4,9 * | 1,5,14, 15 | |
| E | EP 4 056 539 A1 (ARMACELL ENTPR GMBH & CO KG [DE]) 14 September 2022 (2022-09-14) * paragraphs [0051] – [0625], [0006], [0010], [0033] – [0037] * | 1-15 | |
| A | US 2021/163303 A1 (EVANS OWEN R [US] ET AL) 3 June 2021 (2021-06-03) * paragraphs [0003], [0004], [0007], [0068], [0111]; examples 1,2 * | 1 | |

TECHNICAL FIELDS
SEARCHED      (IPC)

C04B
C08J

The present search report has been drawn up for all claims

| Place of search | Date of completion of the search | Examiner |
|---|---|---|
| Munich | 27 January 2023 | Schweissguth, Martin |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 22 19 4399

This annex lists the patent family members relating to the patent documents cited in the above-mentioned European search report.
The members are as contained in the European Patent Office EDP file on
The European Patent Office is in no way liable for these particulars which are merely given for the purpose of information.

27-01-2023

| Patent document cited in search report | | Publication date | Patent family member(s) | | Publication date |
|---|---|---|---|---|---|
| US 2007259979 | A1 | 08-11-2007 | NONE | | |
| US 2012142802 | A1 | 07-06-2012 | NONE | | |
| EP 4056539 | A1 | 14-09-2022 | CA | 3174204 A1 | 15-09-2022 |
| | | | CA | 3174622 A1 | 15-09-2022 |
| | | | EP | 4056539 A1 | 14-09-2022 |
| | | | WO | 2022189425 A1 | 15-09-2022 |
| | | | WO | 2022189433 A1 | 15-09-2022 |
| | | | WO | 2022189436 A1 | 15-09-2022 |
| US 2021163303 | A1 | 03-06-2021 | AU | 2020396088 A1 | 07-07-2022 |
| | | | BR | 112022010852 A2 | 23-08-2022 |
| | | | CA | 3160225 A1 | 10-06-2021 |
| | | | CN | 115038580 A | 09-09-2022 |
| | | | DE | 202020005871 U1 | 22-12-2022 |
| | | | EP | 4069509 A1 | 12-10-2022 |
| | | | IL | 293574 A | 01-08-2022 |
| | | | KR | 20220109454 A | 04-08-2022 |
| | | | TW | 202135373 A | 16-09-2021 |
| | | | US | 2021163303 A1 | 03-06-2021 |
| | | | WO | 2021113189 A1 | 10-06-2021 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2722311 A2
- EP 3023528 A1
- EP 2722311 A